# EUROPEAN PATENT SPECIFICATION

(11) **EP 2 124 399 B1**
(45) Date of publication and mention of the grant of the patent: **29.04.2015**
(21) Application number: 08700026.1
(22) Date of filing: 15.01.2008
(51) Int. Cl.: H04L 12/58, H04M 15/00

(54) **A METHOD, A DEVICE AND A SYSTEM FOR CONVERGING IP MESSAGE**
VERFAHREN, EINRICHTUNG UND SYSTEM ZUM KONVERGIEREN EINER IP-NACHRICHT
PROCÉDÉ, DISPOSITIF ET SYSTÈME POUR LA MISE EN CONVERGENCE D'UNE MESSAGERIE SUR IP

(30) Priority: 19.01.2007 CN 200710001162; 05.02.2007 CN 200710000419
(43) Date of publication of application: 25.11.2009
(73) Proprietor: Huawei Technologies Co., Ltd., Longgang District Shenzhen, Guangdong 518129 (CN)
(72) Inventor: WANG, Jue, Guangdong Province 518129 (CN); MU, Lunjian, Guangdong Province 518129 (CN); XU, Guojun, Guangdong Province 518129 (CN); LIANG, Gang, Guangdong Province 518129 (CN); HUANG, Cheng, Guangdong Province 518129 (CN)
(74) Representative: Pfenning, Meinig & Partner GbR
(86) International application number: PCT/CN2008/000104
(87) International publication number: WO 2008/089652

(56) References cited:
- WO-A1-2005/117469
- CN-A- 1 668 037
- CN-A- 1 863 209
- CN-A- 1 889 505
- KR-A- 20060 063 618
- US-B1- 6 981 263
- OPEN MOBILE ALLIANCE LTD: "Converged IP Messaging Requirements. Draft Version 1.0" INTERNET CITATION, [Online] 11 January 2007 (2007-01-11), pages 1-48, XP002558898 Retrieved from the Internet: URL:http://member.openmobilealliance.org/f tp/public_documents/req/REQ-CPM/Permanent_ documents/> [retrieved on 2009-12-02]
- HECK J ET AL: "BLENDED IMS MESSAGING APPLICATIONS" BELL LABS TECHNICAL JOURNAL, vol. 4, no. 10, 1 January 2006 (2006-01-01), pages 39-52, XP001239284 WILEY, CA, US ISSN: 1089-7089
- DAVID GEER: "Building converged networks with IMS technology" COMPUTER, vol. 38, no. 1, 1 November 2005 (2005-11-01), pages 14-16, XP008110648 IEEE SERVICE CENTER, LOS ALAMITOS, CA, US ISSN: 0018-9162

## Description

### Field of the Invention

The present invention relates to the communication field; and particularly to a method, a device and a system for implementing Converged IP Messaging (CPM).

### Background of the Invention

Message services deployed on mobile communication networks (such as the second generation (2G) and third generation (3G) mobile communication networks and the multimedia sub-domain) include: Short Message Service (SMS), Multimedia Message Service (MMS), Instant Message (IM) service, and Converged IP Messaging (CPM) service. The message services such as instant message and CPM are based on the Session Initiation Protocol (SIP) technology, and belong to the presence information-based individual-to-individual, individual-to-application, and individual-to-group message types of mobile data services.

The existing message service engines defined by the Open Mobile Alliance (OMA) are separately designed and standardized. Each service provides a single type of user experience, and is limited to a certain medium and application. For example:
- SMS provides a basic text message service;
- MMS provides a basic multimedia message service;
- IM provides a quasi real-time text service; and
- Push-to-talk Over Cellular (PoC) provides a semi-duplex voice service.

As the development of the networks and technologies, many message services have become related and alternative to each other, and have features as follows.
- Many services support multimedia;
- Many services are based on presence-information;
- Many services have a separate address book;
- Many services have some shared common functions and capabilities such as XML document Management Service.

The convergence of the above features needs a single converged messaging platform to adapt different technologies and support a user's different messaging experiences. IP-based converged messaging, i.e. Converged IP Messaging (CPM) is a new message service architecture proposed and specified by the OMA. The CPM provides users with converged messaging experiences such as instant messaging, offline message, multimedia conference, half duplex/full-duplex voice and video conference. The CPM allows a user to use communication services with different technical features in a unified way, and thus overcomes the "Silos" between non-CPM services due to technical differences and provides the user with a unified service experience on services.

In addition to consolidating the basic capabilities of the existing messaging services, led by the communication technologies such as SIP, the CMP service also converges multiple service characteristics emerging during the mobile data service evolvement. For example,

1. The CMP can manage multiple different media types of sessions which are held simultaneously, and allows a user to set the services according to different devices, contact addresses and media types.

2. The CMP service does not depend on operator networks and user terminals, and thus can provide service in multi-terminal condition.

3. The CMP provides a personal network storage capability for a user to store messages and multi-media contents.

4. The CMP support seamless interconnection with a non-CPM system so as to allow different message types of users to intercommunicate to the maximum extent.

5. CMP not only supports one-to-one and one-to-multiple personal data communication services, but also provides a capability of interacting with a third-party application. In implementing the service capability, the CMP interacts with other functional entities of the OMA such as a presence server and an XML document management entity.

The OMA IM provides SIP-based instant messaging which can support a session for mainly messaging text and discrete media, and can support the function of a message chat room in which multiple parties of users participate, and can also provide temporary storage and notification of an offline message. However, the OMA IM cannot provide simultaneous media sharing in the session, cannot provide sufficient to a multi-party multimedia conference, and cannot achieve message state synchronization in multi-terminal condition. Moreover, the interaction with a non-CPM system (such as an SMS system, an Instant Messaging and Presence Service (IMPS) system) is not completely resolved though it is in progress.

The OMA PoC mainly provides SIP-based half-duplex voice, supports controllable real-time voice session, and can implement group communication and network storage. However, the application scenarios of OMA PoC do not include message exchanging and email receiving and sending, nor include the interconnection with a non-CPM system (such as an SMS system and an MMS system).

It can be seen that the non-CPM services (such as SMS, MMS, IM and PoC) are distinguished according to their respective technologies. However, the technology capabilities of these non-CPM services intersect with each other and the service experiences provided by these non-CPM services to the users also overlap. Consequently this will split the market for mobile data terminals and also cause confusion to the user using different messaging services. In addiction, the differences in technologies of the messaging services in turn cause the "Silos" between the messaging services.

D1 (WO 2005/117469) discloses a system for interworking messages of a mobile communications terminal in which a transmitting terminal having a first message client installed therein for transmitting multimedia contents to a receiving terminal having a second message client installed therein.

### Summary of the Invention

The embodiments of the present invention provide a method and a system for implementing converged IP messaging to overcome the intersection of the technology capabilities and the overlapping of user experiences of the non-CPM services and the "Silos" between the non-CPM services.

A method for implementing Converged IP Messaging (CPM) includes:
receiving, by a CPM server, a CPM message;
determining, by the CPM server, a service type according to the CPM message and performing corresponding signaling control, wherein the service type comprises at least one of: message delivery service, session service, conference service, a service of operating contents of the CPM message on network side, a service in which a third-party application participates, and a service in which a non-CPM system participates, and wherein for a service requiring a media transport channel, the CPM server determines a media capability of the service and configures corresponding media resources and establishes the media transport channel according to the media capability; and
processing, by the CPM server, contents of the CPM message according to a processing procedure corresponding to the service type.

A CPM server includes:
a communication interface, configured to receive or send a message;
a control unit, configured to determine a service type according to the received CPM message and perform corresponding signaling control, wherein the service type comprises at least one of: message delivery service, session service, conference service, a service of operating contents of the CPM message on network side, a service in which a third-party application participates, and a service in which a non-CPM system participates; and
a media unit, configured to determine, for a service requiring a media transport channel, a media capability of the service, configure corresponding media resources and establish the media transport channel according to the media capability.

A CPM system includes:
a CPM client, configured to generate a corresponding CPM message according to a service type of a CPM service to be performed and send the CPM message, and process a received CPM message according to a processing procedure corresponding to a service type of the received CPM message, wherein the service type comprises at least one of: message delivery service, session service, conference service, a service of operating contents of the CPM message on network side, a service in which a third-party application participates, and a service in which a non-CPM system participates;
a CPM server, configured to determine a service type according to a received CPM message and perform corresponding signaling control and process contents of the CPM message according to a processing procedure corresponding to the service type, wherein for a service requiring a media transport channel, the CPM sever determines a media capability of the service and configure corresponding media resources and establish the media transport channel according to the media capability; and
a transport network, configured to transfer CPM messages of the CPM client and the CPM server.

After receiving a CPM message, the CPM server according to an embodiment of the present invention determines the service type and performs corresponding signaling control according to the CPM message. For a service requiring a media transport channel, the CPM server determines the media capability of the service, configures corresponding media resources and establishes a media transport channel according to the media capability, and processes the contents of the CPM message according to a process corresponding to the service type. Alternatively, after receiving a CPM message, the CPM server determines the service type according to the CPM message, and determines other service server capable of processing the type of service according to the service type, and generates a message and/or a session request corresponding to the other CPM servers according to the CPM message and sends the generated message and/or session request to the other CPM servers for processing, and when receiving a CPM message from the service server, sends the CPM message to the CPM client. In this way the present invention can provide a converged service experience to users and overcome the overlapping of user experiences due to the intersection of the technology capabilities of the non-CPM services. Therefore the methods according to embodiments of the present invention can improve the user's service experience.

### Brief Description of the Drawings

Figure 1 is a main flow chart illustrating a process for implementing converged IP messaging according to a first embodiment of the present invention;
Figure 2 is a structure diagram of a CPM system according to a first embodiment of the present invention;
Figure 3 is a structure diagram of a CPM server according to a first embodiment of the present invention;
Figure 4 is a diagram illustrating the signaling control between inner modules of the CPM server according to a first embodiment of the present invention;
Figure 5 is a flow chart illustrating a process for implementing message delivery according to a first embodiment of the present invention;
Figures 6 and 7 are flow charts illustrating processes for implementing an end-to-end session according to a first embodiment of the present invention;
Figures 8 and 9 are flow charts illustrating processes for implementing a predetermined conference according to a first embodiment of the present invention;
Figures 10 and 11 are flow charts illustrating processes for implementing a temporary conference according to a first embodiment of the present invention;
Figure 12 is a flow chart illustrating a process for implementing a network storage according to a first embodiment of the present invention;
Figure 13 is a flow chart illustrating a process for implementing communication with a third-party application according to a first embodiment of the present invention;
Figure 14 is a main flow chart illustrating a process for implementing converged IP messaging according to a second embodiment of the present invention;
Figure 15 is a structure diagram of a CPM system according to a second embodiment of the present invention;
Figure 16 is a structure diagram of a CPM server according to a second embodiment of the present invention;
Figure 17 is a flow chart illustrating a process for implementing message delivery according to a second embodiment of the present invention;
Figures 18 and 19 are flow charts illustrating processes for implementing an end-to-end session according to a second embodiment of the present invention;
Figure 20 is a flow chart illustrating a process for implementing a multimedia conference according to a second embodiment of the present invention;
Figure 21 is a structure diagram of a system for implementing converged IP messaging according to a third embodiment of the present invention;
Figure 22 is an implementation flow chart illustrating a process for a CPM client to send a message according to a third embodiment of the present invention;
Figure 23 is an implementation flow chart illustrating a process for a CPM client to initiate a session according to a third embodiment of the present invention; and
Figure 24 is an implementation flow chart illustrating a process for a CPM client to receive a session according to a third embodiment of the present invention.

### Detailed Description of the Embodiments

To resolve the intersection of the technology capabilities and the overlapping of user experiences of the non-CPM services and the "Silos" between the non-CPM services, the embodiments of the present invention provide a converged IP messaging (CPM) system.

### A First Embodiment

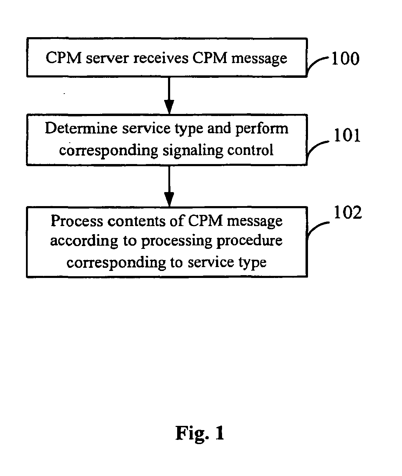

Referring to Figure 1, a main procedure for implementing converged IP messaging according to this embodiment includes the following steps.

Step 100: A CPM server receives a CPM message. The CPM message contains a service request message such as a message request, a session request, a service request for operating the contents of the CPM message on the network side.

Step 101: The CPM server determines the service type according to the CPM message and performs corresponding signaling control. For a service requiring a media transport channel, the CPM server determines the media capability of the service, configures corresponding media resources and establishes a media transport channel according to the media capability.

Step 102: The CPM server processes the contents of the CPM message according to a process corresponding to the service type.

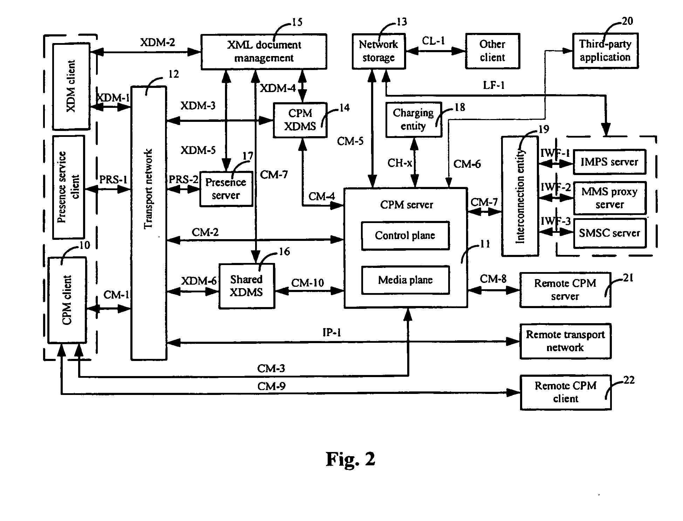

Referring to Figure 2, a system for implementing converged IP messaging according to the embodiment includes: a CPM client 10, configured to create a corresponding CPM message according to the service type of the CPM service to be performed and send the corresponding CPM message to a CPM server 11 via a transport network 12; the CPM server 11, configured to determine the service type according to the received CPM message and process the contents of the CPM message according to a process corresponding to the service type, wherein for a service requiring a media transport channel, the CPM server determines the media capability of the service, configures corresponding media resources and establishes a media transport channel according to the media capability; and the transport network 12, configured to transfer messages between the CPM client 10 and the CPM server 11, and transfer messages between networks.

The transport network 12 may be a packet switched public data network, a circuit switched public data network, a network supporting Transmission Control Protocol/Internet Protocol, a general packet radio service network, a digital wireless phone network, an analog wireless phone network, a public switched telephone network, an integrated services digital network or a broadband integrated services digital network. This embodiment takes a SIP/IP core network as an example of the transport network 12.

The CPM client 10 is deployed in a mobile or fixed terminal or an Internet accessing device. A CPM client should support the following functions:
1. performing the processes of registration and authentication from the CPM client to a SIP/IP Core;
2. sending/receiving CPM messages to/from other CPM clients and providing the user with a notification of the arrival of a message or an invitation;
3. allowing the user to set services according to different devices, contact addresses and media types; and
4. providing network-stored messages, multimedia contents and a user local storage and synchronization capability.

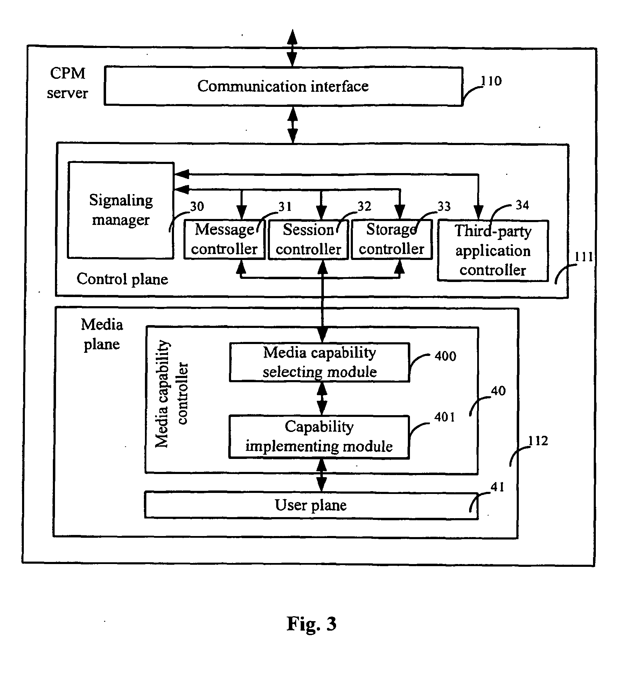

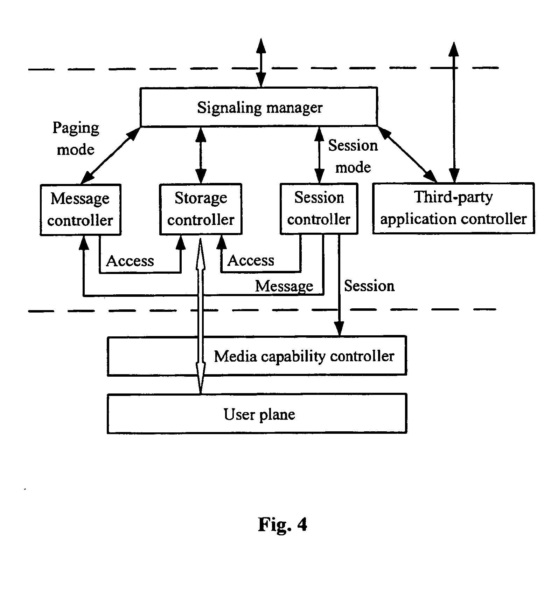

The CPM server 11 includes a communication interface 110, a control plane 111 and a media plane 112. The functions of the functional modules and the service logic relations between the functional modules are described hereunder in detail in conjunction with Figures 3 and 4.

The control plane 110 includes a signaling manager 30, a message controller 31, a service controller 32, a storage controller 33 and a third-party application controller 34.

The signaling manager 30 is adapted to process received CPM messages and session control signaling.

When receiving a CPM message or session control signaling from the transport network, the signaling manager 30 parses out branch information for further processing the message or session request according to the characteristics of the signaling, that is, determines the controller to which the CPM message or session control signaling is to be forwarded. This processing procedure mainly includes that: the signaling manager 30 parses the signaling request and determines the CPM service request type, for example, a SIP message, and then determines whether this message is a single message in Page Mode or a message of a session in Session Mode according to the Request Uniform Resource Identifier (URI) in this message; then the signaling manager 30 forwards the signaling to the corresponding message controller 31 or session controller 32; the message controller 31 or session controller 32 determines whether the message or the contents of the session need to be stored, and if need, forwards the message or the session control signaling to the storage controller 33 for processing.

When receiving a result of processing the message or session control signaling from other controller, the signaling manager parses out branch information for further processing the message or session control request according to the characteristics of the signaling. This processing procedure mainly includes: if the result is control signaling returned by the message controller 31 or the session controller 32, the signaling manager sends the request to the next hop of the receiving party according to the contents in the head field of the signaling (such as the information carried in the Request URI), for example, forwards the request to the CPM server via the SIP/IP core network; and if the result is control signaling returned by the storage controller 33, the signaling manager establishes a session between the storage controller 33 and a network storage entity for the succeeding message or session access.

The message controller 31 is configured to receive a message forwarded from the signaling manager 30, perform a configurable operation on the contents of the message and then send the message to the message controller. The message controller 31 is also configured to send an accessing request to the storage controller 33 for storing the contents of the message when the message contains a network accessing request.

The session controller 32 is configured to receive session control signaling forwarded by the signaling manager 30, forward a message request in a session to the message controller 31 for processing; perform a configurable operation on the session signaling and then forward the session signaling to the signaling manager 31, and send to the media plane an instruction for performing session media capability control; and when the session contains a request requiring operating the contents of the session, send a request for operating the contents of the session to the storage controller 33.

The storage controller 33 is configured to receive from the message controller 31 and the session controller 32 a request for operating on the network side the contents of a message, the contents of the session history and media data possibly contained in the message and the session history according to the request; and obtain the contents of the session from the media plane when storing the history of the session. The operations include storing, obtaining, deleting and updating.

The third-party application controller 34 receives a message or session control signaling sent by the message controller 31 and the session controller 32 via the signaling manager 30, perform protocol processing and conversion on the message or session control signaling and then send the message or session control signaling to a third-party application; and receive a message or session control signaling send by the third-party application, and perform protocol processing and conversion on the message or session control signaling and then send the message or session control signaling to the message controller 31 or the session controller 32 via the signaling manager 30.

The media plane 112 includes:
a media capability controller 40, configured to determine the session media capability of received session control signaling and request media resource management of a session; and
a user plane 41, configured to provide resource management for a session according to the request of the media capability controller 40.

The media capability controller 40 further includes:
a media capability selecting module 400, configured to receive a request for allocating media resources to a CPM session sent by the control plane, determine the media capability required by the session according to the mission media description in the request signaling, and send the request signaling to a corresponding capability performing module.

Multiple capability performing modules, configured to operate media according to control signaling, and includes:
a message transferring module, adapted to decide a route of the message to the domain of the receiving party and implement message transport according to the SIP URI of the receiving user and the presence information in the received message and information such as the user service setting, and transfer a notification message to the user when a new message arrives;
a full-duplex/half-duplex session module, configured to determine a route to the domain of the receiving party of a session, negotiate media parameters and mix the session policy and the media;
an audio/video streaming media module, configured to decide a route to the domain of the receiving party of a session, and ensure the Quality of Service (QoS) of streaming media transport;
an email sending module, configured to send a email; and
a document transferring module, configured to transfer a document;

The communication interface 110 is configured for the communication between the functional entities in the system, and defined to include the followings.

### 1. A first interface (CM-2 interface)

The first interface is based on the SIP protocol, used for the communication between the CPM server and the SIP/IP core network, and supports:
- transferring CPM session signaling between the CPM client and the CPM server;
- exchanging messages between the CPM client and the CPM server;
- providing an address parsing service;
- distributing and subscribing to presence information for the CPM server by using a presence functional entity;
- subscribing to a notification of modifications of the XML documents stored in CPM XML Document Management Server (XDMS) or Shared XDMS; and
- distributing CPM user service setting.

### 2. A second interface (CM-3 interface)

The second interface is configured for the communication between the CPM client and the CPM server, and may implement transmission protocols required by media communication, such as Message Session Relay Protocol (MSRP), Real-time Transport Protocol (RTP)/Real-time Transport Control Protocol (RTCP) and Hyper Text Transport Protocol (HTTP), and supports:
- converged message (message, email, document) transferring;
- simplex/duplex voice conference; and
- streaming media transport.

### 3. The third interface (CM-4 interface)

The third interface is based on XML Configuration Access Protocol (XCAP) protocol, used for the communication between the CPM server and the CPM XDMS, and supports:
- generating a CPM-specific XML document; and
- performing management operations such as searching, updating and deleting on the XML document.

### The fourth interface (CM-5 interface)

The fourth interface is configured for the communication between the CPM server and the network storage entity, and may implement transmission protocols required by the media communication, such as MSRP, RTP and HTTP, and supports:
- storing and retrieving a uniform user contact list independent from the communication service technologies;
- storing and retrieving a separate message and a separate history of a session; and
- storing and retrieving multimedia data.

### 5. The fifth interface (CM-6 interface)

The fifth interface is based on a specific protocol such as SIP, used for the communication between the CPM server and a third-party application, and supports:
- message exchange independent from media type between the CPM server and a third-party application.

### 6. The sixth interface (CM-7 interface)

The sixth interface is configured for the communication between the CPM server and an interconnection entity, and supports:
- message exchange independent from media type between the CPM server and a non-CPM system; and
- maintaining the protocol of a non-CPM system unchanged.

### 7. A seventh interface (CM-10 interface)

The seventh interface is based on the XCAP protocol, configured for the communication between the CPM server and the Shared XDMS, and supports:
- searching for group-specific information in a CPM service;
- searching for user setting information in a CPM service; and
- searching for URI list information in a CPM service.

### 8. An eighth interface (CH-x interface)

The eighth interface is configured for the communication between the CPM server and a charging entity, and supports:
- offline and online charging functions;
- reporting a charging event after CPM service communication; and
- reporting an intermediate charging event during CPM service communication.

### 9. A ninth interface (CM-8 interface)

The ninth interface is based on the media transport protocol, configured for the communication between the CPM server and a remote CPM server, and may implement various protocols required by the media communication, such as MSRP, RTP and HTTP, and supports:
- converged message (message, email, document) transferring;
- simplex/duplex voice conference; and
- streaming media transport based on various audio and video encoding format.

### 10. A tenth interface (CM-1 interface)

The tenth interface is based on the SIP protocol, configured for the communication between the CPM client and the SIP/IP core network, and supports:
- transferring CPM session signaling between the CPM client and the CPM server;
- exchanging messages between the CPM client and the CPM server;
- providing server finding and address parsing services;
- providing SIP compression function;
- performing authentication and authorization processes according to a service to which a CPM user subscribes; and
- providing registration of CPM user terminal.

### 11. An eleventh interface (CM-9 interface)

The eleventh interface is based on the media transport protocol, configured for the communication between the CPM client and a remote CPM client, and may implement various protocols required by the media communication, such as MSRP, RTP and HTTP, and supports:
- converged message (message, email, document) transferring;
- simplex/duplex voice conference; and
- streaming media transport based on various audio and video encoding format.

### 12. A twelfth interface (XDM-3 interface)

The twelfth interface is based on the XCAP protocol, configured for the communication between the CPM XDMS and the SIP/IP core network, and supports:
- subscribing to modifications of the XML documents stored on the network side; and
- notifying the modifications of the XML documents stored on the network side.

### 13. A thirteenth interface (XDM-4 interface)

The thirteenth interface is based on the XCAP protocol, configured for the communication between the CPM XDMS and the XML document management entity, and supports:
- CPM service-specific XML document management functions (such as creating, updating, searching and deleting).

### 14. LF-1 interface

This interface is configured for the communication between a non-CPM system and the network storage entity, and may implement various protocols required by the media communication, such as MSRP, RTP/RTCP and HTTP, and supports:
- storing and retrieving a uniform user contact list independent from the communication service technologies;
- storing and retrieving a separate message and a separate history of a session; and
- storing and retrieving multimedia data.

### 15. CL-1 interface

This interface is configured for the communication between a non-CPM client and the network storage entity, and may implement various protocols required by the media communication, such as MSRP, RTP/RTCP and HTTP, and supports:
- storing and retrieving a uniform user contact list independent from the communication service technologies;
- storing and retrieving a separate message and a separate history of a session; and
- storing and retrieving multimedia data.

### 16. IP-1 interface

This interface is based on the SIP protocol, configured for the communication between the SIP/IP core network and a remote SIP/IP core network, and supports:
- communicating and forwarding the SIP signaling between the SIP/IP core networks; and
- transferring charging information.

### 17. XDM-1 interface

This interface is based on the SIP protocol, configured for the communication between an XDM client and the SIP/IP core network, and supports:
- subscribing to modifications of the XML documents stored on the network side; and
- notifying the modifications of the XML documents stored on the network side.

### 18. XDM-2 interface

This interface is based on the XCAP protocol, configured for the communication between the XDM client and the XML document management entity, and supports:
- XML document management functions (such as creating, updating, searching and deleting); and
- bi-directional authentication between the XDM client and the XML document management entity.

### 19. XDM-5 interface

This interface is based on the XCAP protocol, configured for the communication between the presence server and the XML document management entity, and supports:
- presence service-specific XML document management functions (such as creating, updating, searching and deleting).

### 20. XDM-6 interface

This interface is based on the SIP protocol, configured for the communication between the Shared XDMS and the SIP/IP core network, and supports:
- subscribing to modifications of the XML documents stored on the network side; and
- notifying the modifications of the XML documents stored on the network side.

### 21. XDM-7 interface

This interface is based on the XCAP protocol, configured for the communication between the Shared XDMS and the-XML document management entity, and supports:
- Shared specific XML document management functions (such as creating, updating, searching and deleting).

### 22. PRS-1 interface

This interface is based on the SIP protocol, configured for the communication between a presence client and the SIP/IP core network, and supports:
- distributing presence information;
- subscribing to presence information and receiving a notification; and
- SIP compression and de-compression.

### 23. PRS-2 interface

This interface is based on the SIP protocol, configured for the communication between the presence server and the SIP/IP core network, and supports:
- distributing presence information;
- subscribing to presence information and receiving a notification; and
- subscribing to modifications of presence service-specific XML documents.

### 24. IWF-1 interface

This interface is based on the HTTP protocol, configured for the communication between the interconnection entity and an IMPS server, and supports:
- message exchange independent from media type between the interconnection functional entity and the IMPS server.

### 25. IWF-2 interface

This interface is based on the HTTP protocol, configured for the communication between the interconnection entity and an MMS Proxy/Relay, and supports:
- message exchange independent from media type between the interconnection functional entity and the MMS Proxy/Relay.

### 26. IWF-3 interface

This interface is based on the Short Message Peer-to-Peer (SMPP) protocol, configured for the communication between the interconnection entity and a Short Message Service Center (SMSC) server, and supports:
- message exchange independent from media type between the interconnection entity and the SMSC server.

The interfaces described in the above sections 16 to 26 have been existed in the existing messaging system but now provide support for the deployment of the CPM service.

The CPM system according to this embodiment also includes the following functional entities.

A network storage entity 13 is configured to collectively store user data, and provides the following functions: a uniform user contact list independent from the communication service technologies, a separate message, history list and multimedia data; all network-stored data may be synchronized to a user terminal and can deploy a corresponding storage capability according to the user service setting and the operator policy.

A CPM XDMS entity 14 is configured to store specific information in XML document format and associated with a CPM service kept by a CPM user.

An XML document management entity 15 is configured to provide access and control of a network-stored XML document for a CPM user and manage a CPM-specific XML document (such as a session history data document collectively stored by CPM or a user contact list in the Shared XDMS) stored on the network side, and provide an access control point of a network-stored XML document for an XDM client and perform authentication of the XDM client, XCAP route requesting and network-stored XML document searching.

A Shared XDMS entity 16 is configured to provide access and control of an XML document shared by OMA service functional entities (OMA Enabler) including the CPM functional entity.

Both the CPM XDMS entity 14 and the Shared XDMS entity 16 serve as an XCAP server to provide XML document management for CPM users.

A presence server 17 is configured to allow a CPM user to distribute and subscribe to presence information (such as the state of online or offline).

A charging entity 18 is configured to receive charging time information reported from a CPM service and provide charging basis for the operator.

An interconnection entity 19 is configured to define standard interfaces for the interconnection between the CPM system and other systems, perform corresponding format conversion between a CPM message and a non-CPM message, and allow seamless interaction between a CPM user and a user of other non-CPM messaging system.

A third-party application entity 20 is configured to provide a third-party application service for a CPM user.

One or more remote CPM servers 21 are configured to perform remote CPM service interaction with the CPM server.

One or more remote CPM clients 22 are configured to perform remote CPM service interaction with the CPM client.

The above functional entities communicate with each other via the communication interfaces as defined above to implement service interaction.

The technical solutions according to the embodiments of the present invention will be described in detail by way of example in conjunction with the accompanying drawings.

Messaging is a basis service function provided by the CPM server. The contents of a converged message may be common text, picture in multimedia format, and a piece of video or audio. An appropriate transport scheme (such as transmission via a SIP MESSAGE or establishment of an MSRP message transport channel) can be selected for the converged message according to the size of the message.

Example 1: Both CPM users A and B are subscribers to the SIP/IP Core. It is assumed that: the CPM users A and B have the same home network; the CPM user A sends a message but not a session invitation to the CPM user B; the CPM Clients of the two users transfers SIP messages between each other; and CPM Servers A and B are respectively the CPM servers of the home networks of the CPM users A and B. In this example, the CPM server provides message delivery between a CPM user and a user of a non-CPM system and that between a CPM user and a third-party application, based on the support of the interconnection entity and the third-party application interface of the CPM system.

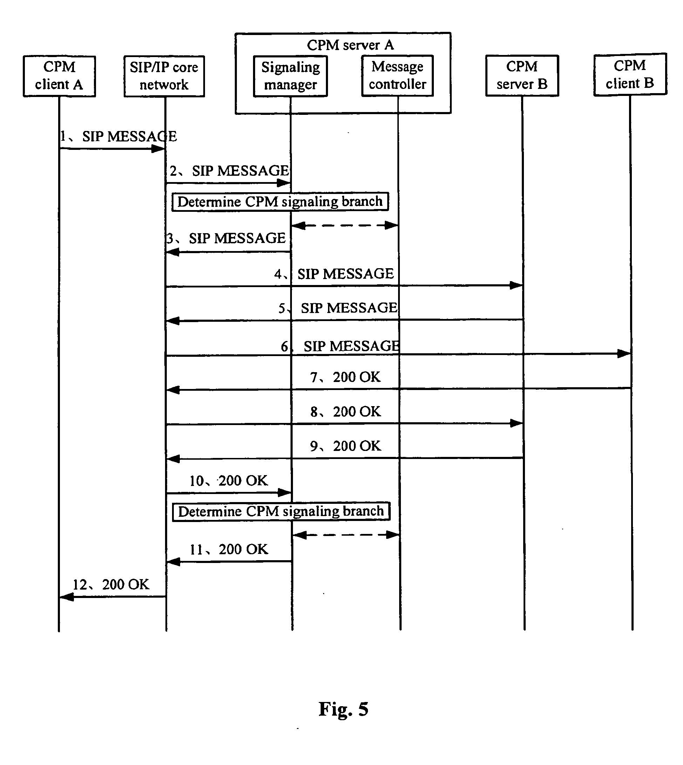

As shown in Figure 5 (in which not all functional entities of the CPM Server are shown), a procedure for message delivery according to the embodiment is described as follows.

Step 1: The CPM Client A sends a CPM message to the SIP/IP Core via a SIP MESSAGE.

Step 2: The SIP/IP Core forwards the SIP MESSAGE to the CPM Server A. Upon receipt of the SIP MESSAGE, a signaling manager in the CPM Server A analyzes the message and determines that the service type is message delivery service, and then sends the message to a message controller in the CPM Server. The message controller applies a message control policy to the message and then returns the message to the signaling manager. The message control policy includes transactions such as updating the message transport state, determining the network storage and reporting the charging time. The specific execution path is determined according to the server policy and the user service setting. The signaling manager determines the next hop of the receiving party according to the message returned by the message controller.

Step 3: The CPM Server A forwards the SIP MESSAGE to the SIP/IP Core.

Step 4: The SIP/IP Core forwards the SIP MESSAGE to the CPM Server B. The CPM Server B performs a processing procedure similar to that performed by the CPM Server A at Step 2, which will not be repeated here.

Step 5: The CPM Server B forwards the SIP MESSAGE to the SIP/IP Core.

Step 6: The SIP/IP Core forwards the SIP MESSAGE to the CPM Client B. If the user B is offline, the CPM Server B simply discards the message or notifies the user B to retrieve the message when the user B is online again, according to a predetermined policy.

Step 7 to Step 10: The CPM Client B sends a response message SIP 200 OK to the CPM Server A via the SIP/IP Core and the CPM Server B. When the CPM Server A receives the response message, the signaling controller in the CPM Server A analyzes the message and determines that the service type is message delivery, and then sends the message to the message controller in the CPM Server A. The message controller applies a message control policy to the message and then returns the message to the signaling manager. The control policy includes transactions such as updating the message transport state, determining the network storage and reporting the charging time. The specific execution path is determined according to the server policy and the user service setting.

Step 11: The CPM Server A forwards the SIP 200 OK to the SIP/IP Core.

Step 12: The SIP/IP Core forwards the SIP 200 OK to the CPM Client A.

The CPM server provides a capability of one-to-one multimedia session between two users, and allows a CPM Client to negotiate and adjust the media type of the session during the life time of the session. The CPM server also supports other user to attend an end-to-end session being held between users. The CPM server can also store the contents of the session on the network side if it is desired.

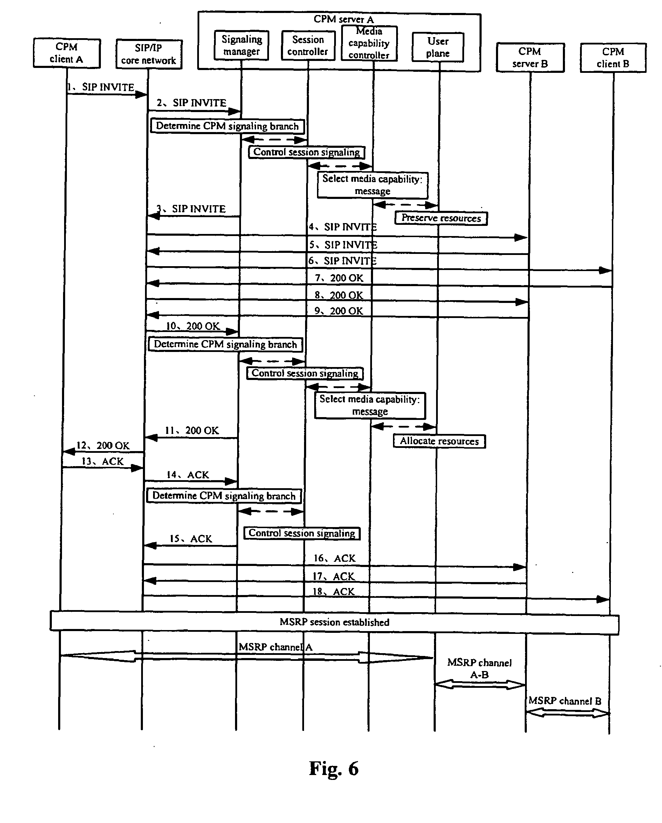

Example 2: Both CPM users A and B are subscribers to the SIP/IP Core. It is assumed that: the CPM users A and B have the same home network; and CPM Servers A and B are respectively the CPM servers of the home networks of the CPM users A and B. In this example, the CPM user A sends a chat session request to the CPM user B and a one-to-one multimedia session is made between the two users. As shown in Figure 6 (in which not all functional entities of the CPM Server are shown), a procedure for implementing the end-to-end session according to the embodiment is described as follows.

Step 1: The CPM Client A sends a SIP INVITE to the SIP/IP Core.

Step 2: The SIP/IP Core forwards the SIP INVITE to the CPM Server A. Upon receipt of the SIP INVITE, the CPM Server A performs the following processing: a signaling manager in the CPM Server A analyzes the message and determines that the service type is session invitation. On one hand the signaling manager sends the message to a session controller in the CPM Server. The session controller applies a message control policy to the message and then returns the message to the signaling manager. The message control policy includes transactions such as updating the session state, determining the network storage of the session history and reporting the charging time. The specific execution path is determined according to the server policy and the user service setting. On the other hand, the signaling manager preserves resources such as transport port at the media unit. The signaling manager determines the next hop of the receiving party according to the message returned by the session controller.

Step 3 to Step 6: The CPM Server A forwards the SIP INVITE to the CPM Client B via the SIP/IP Core and the CPM Server B. At that time, the CPM Server B performs a processing procedure similar to that performed by the CPM Server A at Step 2.

Step 7 to Step 10: If the user B is online and accepts the session invitation, the CPM Client B forwards a response message SIP 200 OK to the CPM Server A via the SIP/IP Core and the CPM Server B. Upon receipt of the response message, the CPM Server A performs the following processing: the signaling manager in the CPM Server A analyzes the message and determines that the service type is session invitation. On one hand the signaling manager sends the message to a session controller in the CPM Server. The session controller applies a message control policy to the message and then returns the message to the signaling manager. The message control policy includes transactions such as updating the session state, determining the network storage of a history of the session and reporting the charging time. The specific execution path is determined according to the server policy and the user service setting. On the other hand, the signaling manager preserves resources such as transport port at the media unit. The signaling manager determines the next hop of the receiving party according to the message returned by the session controller.

Step 11 to Step 12: The CPM Server A forwards the SIP 200 OK to the CPM Client A via the SIP/IP Core.

Step 13 to Step 18: The CPM Client A forwards an ACK acknowledgement message to the CPM B via the SIP/IP Core and the CPM Servers A and B. During these steps, when the CPM Servers A and B receive the message, the signaling managers in the servers A and B analyze the received message and determine that the message is a session invitation, and branch the message to the respective session controllers in the servers A and B. The session controllers then perform control policy.

At this time the respective CPM Servers A and B of the users A and B implement session initiation in the signaling control plane, such as media type negotiation, contact addresses of the two parties of the session, and the allocation of a media transport port number for a specific protocol. The CPM Servers A and B implement allocation of communication resources required for session transport in the media plane of the user session. A communication channel for the one-to-one session between the users A and B has been established. In this embodiment it is assumed that the users A and B make a one-to-one text message session on an established MSRP channel, and the MSRP session channel for media content transport between the users A and B passes through the CPM Servers A and B. Alternatively, the MSRP session channel between the users A and B may not pass through the CPM Servers A and B, that is, the users A and B make a message session directly via an end-to-end MSRP channel.

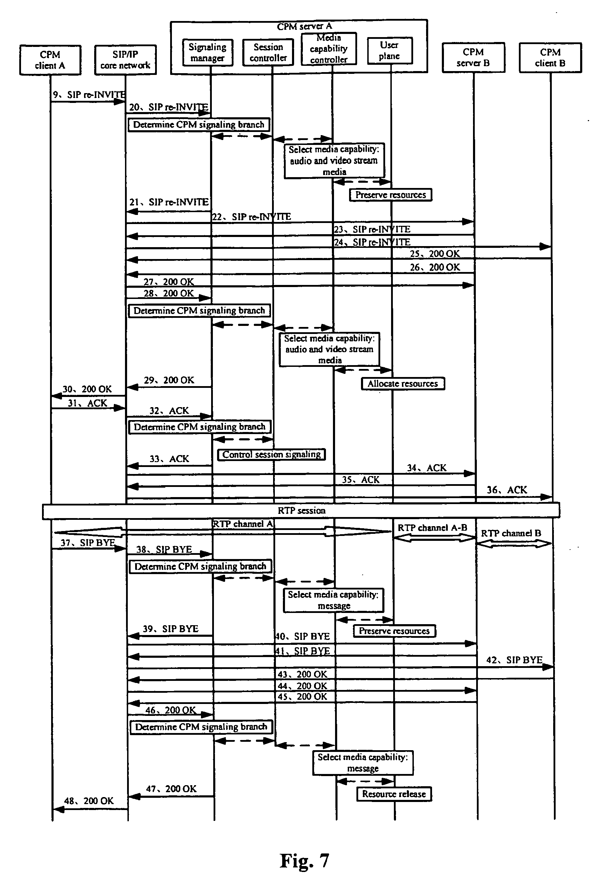

During the above session the users can request to modify the media type used in the session. For example, the user A has a capability of adding an audio or video stream media session on the basis of a message session. As shown in Figure 7 (in which not all functional entities of the CPM Server are shown), a procedure for modifying the media type during a session is described as follows.

Step 19 to Step 24: The CPM Client A sends a SIP re-INVITE message to the CPM Client B via the SIP/IP Core, the CPM Server A and the CPM Server B. The message carries an updated session media type.

Step 25 to Step 30: The user B accepts the modification request of the user A. The CPM Client B sends a response message SIP 200 OK to the CPM Client A via the CPM Server B, the SIP/IP Core and the CPM Server A.

Step 31 to Step 36: The CPM Client A sends an ACK acknowledgement message to the CPM Client B via the SIP/IP Core, the CPM Server A and the CPM Server B.

At this time the CPM users A and B make a one-to-one session with the updated media type. When the user A terminates the session, the procedure is implemented as follows.

Step 37 to Step 42: The CPM Client A sends a SIP BYE message to the CPM Client B via the SIP/IP Core, the CPM Server A and the CPM Server B.

Step 43 to Step 48: The CPM Client B sends a response message SIP 200 OK to the CPM Client A via the CPM Server B, the SIP/IP Core and the CPM Server A.

At this time the end-to-end session between the users A and B is terminated. The CPM Servers A and B release respective communication resources.

Multi-party multimedia conference, i.e. multimedia conference is another service provided by the CPM system. This service allows a group of CPM users to make a many-to-many multimedia session under the coordination by a conference control center (which may be a CPM server or other dedicated network entity). In this example two conference scenarios including a predetermined conference and a temporary conference supported by the CPM server are described. The predetermined conference may be initiated by a conference server (such as the CPM server) according to a conference policy or initiated by a participant of the predetermined conference. The temporary conference may be established through a temporary request of a CPM user and allows any other user who is authorized to participate in this conference.

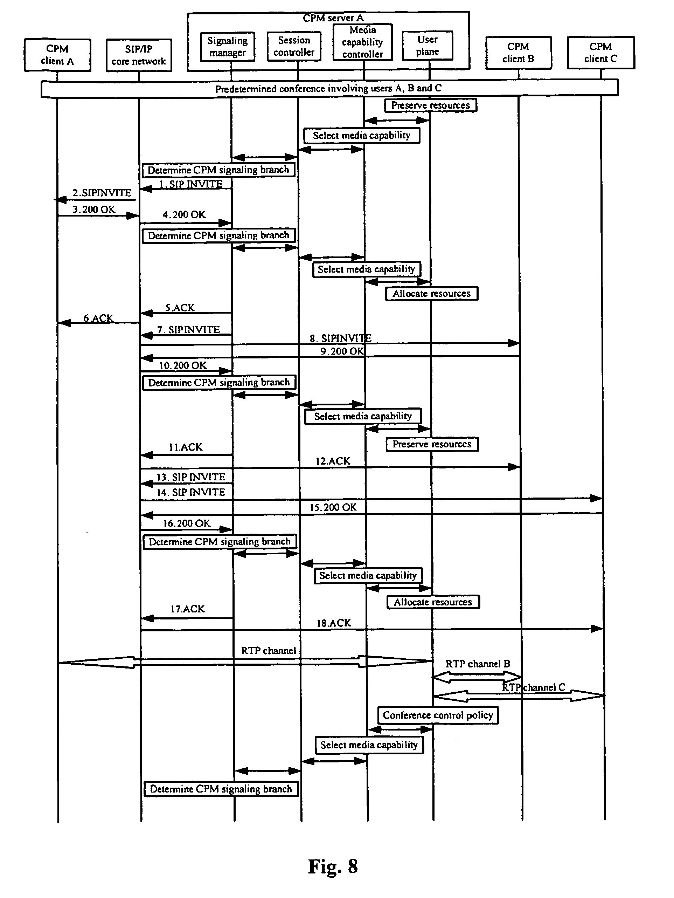

Example 3: the CPM Server is a CPM server of the home network of CPM users A, B and C. The three users belong to the same home network. All of the users are subscribers to the SIP/IP Core. As shown in Figure 8 (in which not all functional entities of the CPM Server are shown), a procedure for implementing a predetermined conference between the CPM users A, B and C is described as follows.

The conference server, i.e. the CPM Server initiates a session invitation to all the participants of the predetermined conference according to a predetermined conference policy. The media plane in the CPM Server reserves resources according to a predetermined conference media policy, and for the participant list, the signaling manager sends a SIP INVITE message to the users A, B and C via the SIP/IP Core.

Step 1: The CPM Server sends a SIP INVITE message to the SIP/IP Core.

Step 2: The SIP/IP Core forwards the SIP INVITE to the CPM Client A.

Step 3: The CPM Client A sends a SIP 200 OK message to the SIP/IP Core.

Step 4: The SIP/IP Core forwards the SIP 200 OK message to the CPM Server. When the CPM Server receives the message, the signaling manager in the CPM Server analyzes the message and determines that the service type is session invitation. On one hand the signaling manager sends the message to a session controller in the CPM Server. The session controller applies a message control policy to the message and then returns the message to the signaling manager. The message control policy includes transactions such as updating the session state, determining the network storage of a history of the session and reporting the charging time. The specific execution path is determined according to the server policy and the user service setting. On the other hand, the signaling manager preserves resources such as transport port at the media unit. The signaling manager determines the next hop of the receiving party according to the message returned by the session controller.

Step 5: The CPM Server sends an ACK acknowledgement message to the SIP/IP Core.

Step 6: The SIP/IP Core forwards the ACK message to the CPM Client A. At this time the user A participates in the predetermined conference successfully.

Step 7 to Step 8: The CPM Server sends a SIP INVITE message to the CPM Client B via the SIP/IP Core.

Step 9 to Step 12: These steps are implemented in the same way as Step 3 to Step 6. At this time the user B participates in the predetermined conference successfully.

Step 13 to Step 14: The CPM Server sends a SIP INVITE message to the CPM Client C via the SIP/IP Core.

Step 15 to Step 18: These steps are implemented in the same way as Step 3 to Step 6. At this time the user C participates in the predetermined conference successfully.

The participants A, B and C of the predetermined conference make a many-to-many session with the established conference communication channel according to the media policy of the conference under the control of the CPM Server. In this example it is assumed that the three users make a stream media conference characterized by audio and video using an established RTP channel.

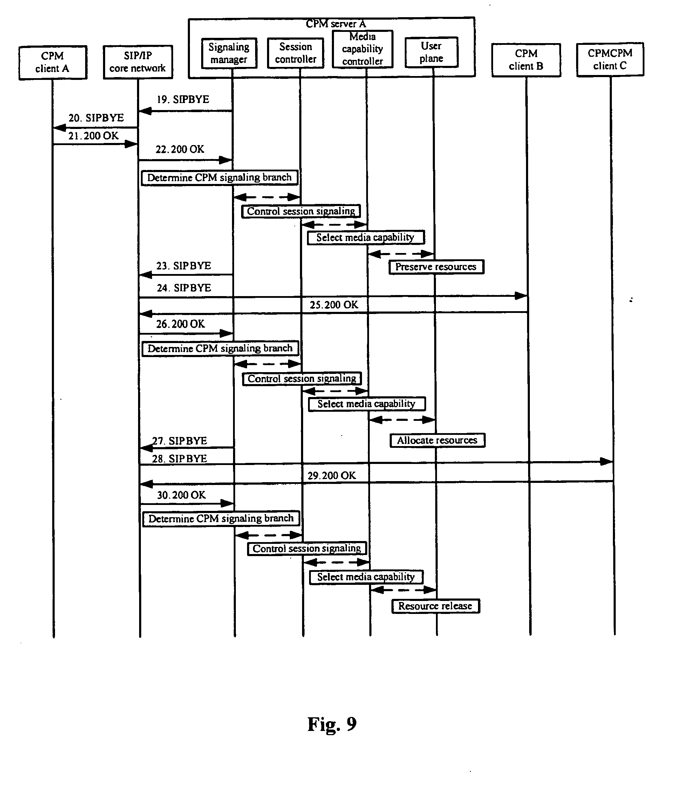

The CPM Server initially requests to terminate the predetermined conference according to the predetermined conference policy. To do this, the CPM Server sends a SIP BYE message to the Clients A, B and C via the SIP/IP Core. As shown in Figure 9, the procedure is described as follows.

Step 19: The CPM Server sends a SIP BYE message to the SIP/IP Core.

Step 20: The SIP/IP Core forwards the SIP BYE message to the CPM Client A.

Step 21: The CPM Client A sends a SIP 200 OK message to the SIP/IP Core.

Step 22: The SIP/IP Core forwards the SIP 200 OK message to the CPM Server. When the CPM Server receives the message, a management entity of the CPM Server analyzes the signaling and determines that the service type is session, and then branches the message to the session control entity of the CPM Server. The session control entity applies a session control policy. The user A terminates the session with the CPM Server.

Step 23 to Step 24: The CPM Server sends the SIP BYE message to the CPM Client B via the SIP/IP Core.

Step 25 to Step 26: These steps are implemented in the same way as Step 19 to Step 20. At this time the user B terminates the session with the CPM Server.

Step 27 to Step 28: The CPM Server sends the SIP BYE message to the CPM Client C via the SIP/IP Core.

Step 29 to Step 30: These steps are implemented in the same way as Step 19 to Step 20. At this time the user C terminates the session with the CPM Server.

At this time the predetermined conference is determined. The CPM Server releases the resources for the conference in the media plane.

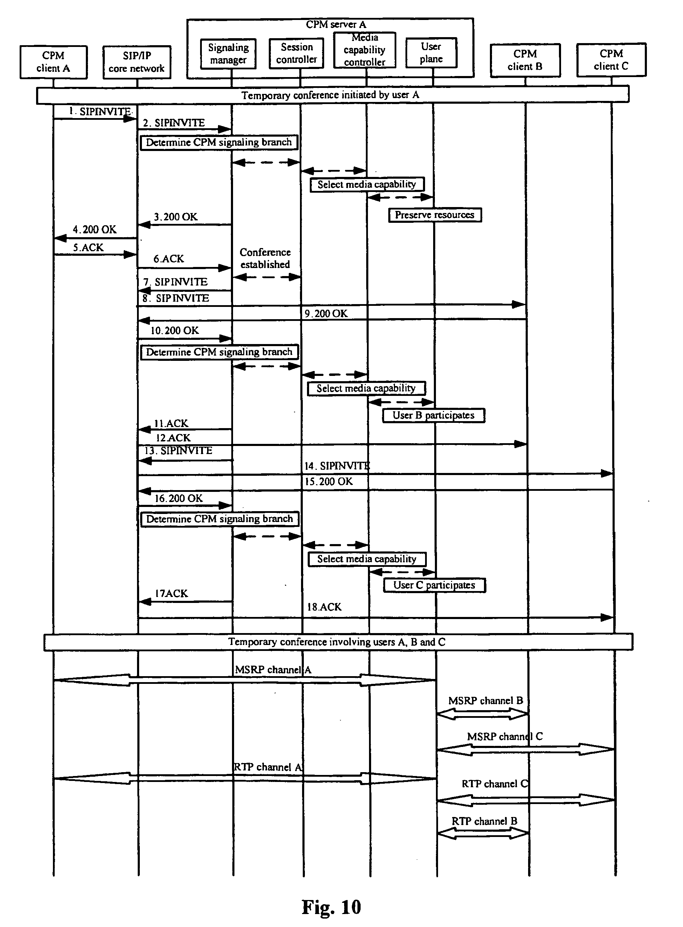

The user A requests the conference server to establish a conference. The session media type of the conference includes text message, audio and video stream media. As shown in Figure 10 (in which not all functional entities of the CPM Server are shown), a main procedure for implementing a temporary conference between the CPM users A, B and C is described as follows.

Step 1: The CPM Client A sends a SIP INVITE message to the SIP/IP Core to request to establish a temporary conference.

Step 2: The SIP/IP Core forwards the SIP INVITE message to the CPM Server. When the CPM Server receives the message, the signaling manager in the CPM Server analyzes the message and determines that the service type is session invitation. On one hand the signaling manager sends the message to a session controller in the CPM Server. The session controller applies a message control policy to the message and then returns the message to the signaling manager. The message control policy includes transactions such as updating the session state, determining the network storage of a history of the session and reporting the charging time. The specific execution path is determined according to the server policy and the user service setting. On the other hand, the signaling manager preserves resources such as transport port at the media unit. The signaling manager determines the next hop of the receiving party according to the message returned by the session controller.

Step 3: The CPM Server applies a conference control policy through the media plane therein and determines whether to allocate resources for the conference. If the request for establishing the conference is accepted, the signaling manager sends a SIP 200 OK message to the SIP/IP Core.

Step 4: The SIP/IP Core forwards the SIP 200 OK to the CPM Client A.

Step 5 to Step 6: The CPM Client A sends an ACK acknowledgement message to the CPM Server via the SIP/IP Core. At this time the user A establishes the temporary conference successfully. According to a media type negotiated for the conference session, a participant of the temporary conference can chat with a message and share an audio and a video.

Step 7 to Step 12: These steps are implemented in the same way as Step 1 to Step 5. During these steps, the CPM Server applies a similar conference control policy and the user B participates in the temporary conference successfully.

Step 13 to Step 18: These steps are implemented in the same way as Step 1 to Step 5. During these steps, the CPM Server applies a similar conference control policy and the user C participates in the temporary conference successfully.

At this time all the users A, B and C participate in the temporary conference, and make a many-to-many session with the established conference communication channel according to the media policy of the conference under the control of the CPM Server. In this example it is assumed that the three users make a stream media conference characterized by audio and video using an established RTP channel.

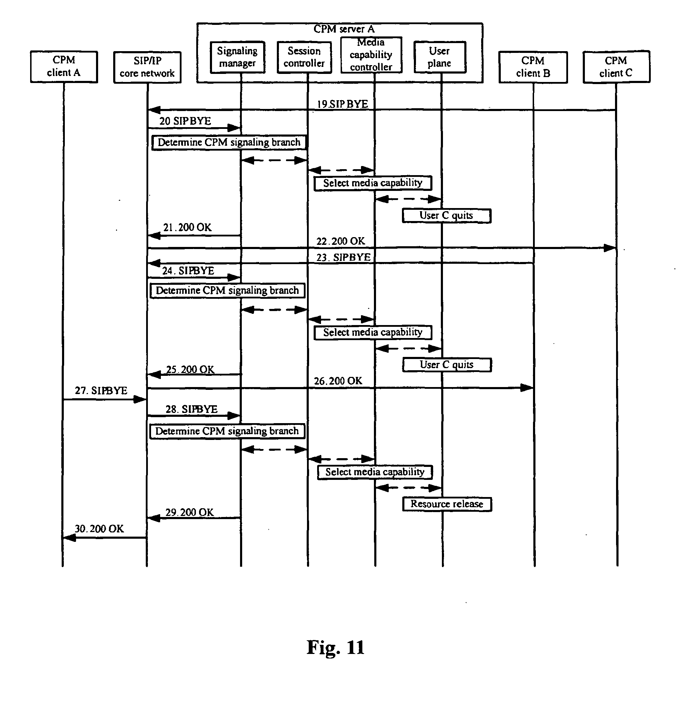

During the temporary conference a user requests to quit the temporary conference. As shown in Figure 11 (in which not all functional entities of the CPM Server are shown), the procedure is implemented as follows.

Step 19: The CPM Client C sends a SIP BYE message to the SIP/IP Core.

Step 20: The SIP/IP Core forwards the SIP BYE message to the CPM Server. When the CPM Server receives the message, the signaling manager analyzes the message and determines that the service type is session invitation. On one hand the signaling manager sends the message to the session controller in the CPM Server. The session controller applies a message control policy to the message and then returns the message to the signaling manager. The message control policy includes transactions such as updating the session state, determining the network storage of a history of the session and reporting the charging time. The specific execution path is determined according to the server policy and the user service setting. On the other hand, the signaling manager preserves resources such as transport port at the media unit. The signaling manager determines the next hop of the receiving party according to the message returned by the session controller.

Step 21: When the CPM Server accepts the quit request of the user C, the signaling manager in the CPM Server sends a SIP 200 OK message to the SIP/IP Core.

Step 22: The SIP/IP Core forwards the SIP 200 OK message to the CPM Client C.

Step 23 to Step 26: These steps are implemented in the same way as the above Step 19 to Step 22. The user B quits the temporary conference.

Step 27 to Step 30: These steps are implemented in the same way as the above Step 19 to Step 22. The user A quits the temporary conference.

At this time the temporary conference is terminated. The CPM Server releases the respective resources for the conference in the media plane.

The network storage for the converged messaging can be implemented according to the requirements of user service customization and the service provider's policies. A session message meeting a specific rule is stored by the messaging system for backup. A user is allowed to freely adjust a storage rule for message or session history via negotiation with the service provider. In operating the service of CPM message contents on the network side, the CPM server operates on the network side the message contents, the session history and the multimedia data that is possibly contained in the CPM message and the session history. The operation includes storing, retrieving, deleting and updating.

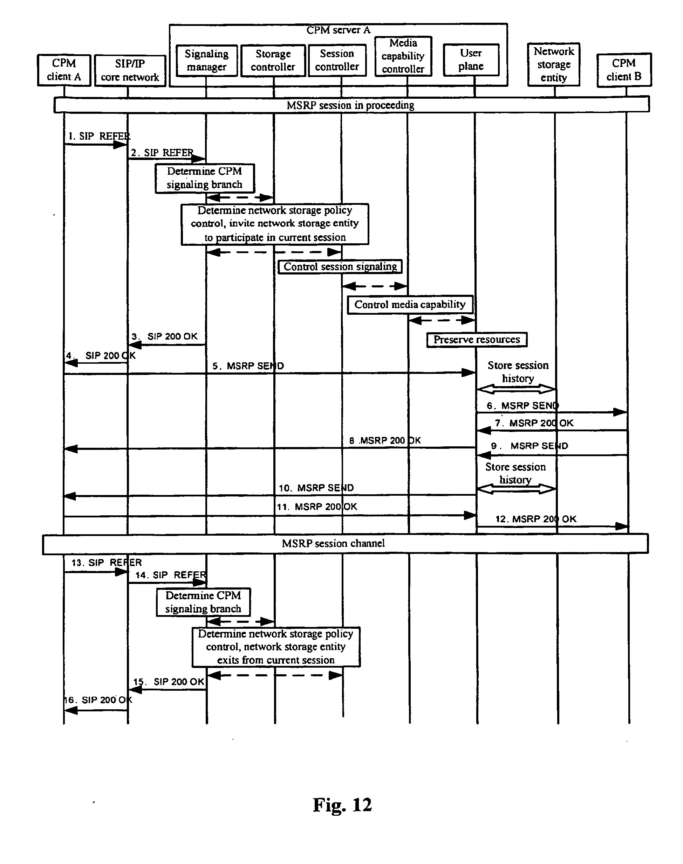

Example 4: During a session, the user A requests the CPM Server to store a history of the session. The CPM system also supports the storage of the message for requesting for implementing a session sent by a user before the session is made, or always implements the network storage of the CPM communication contents according to the service setting of the user. As shown in Figure 12, a procedure for implementing the network storage for the converged messaging is described as follows.

Step 1: The CPM Client A sends a SIP REFER message to the SIP/IP Core. The Refer Method is set as "INVITE".

Step 2: The SIP/IP Core forwards the SIP REFER to the CPM Server.

Step 3: When the CPM Server receives the SIP REFER message, the signaling controller in the CPM Server A analyzes the message and determines that the message is a network storage request for a session, and then branches the message to a storage controller in the CPM Server A to inform the CPM network storage entity to participate in the session being made as a virtual user. At the same time the session controller applies a session control policy which includes transactions such as updating the session state, determining the network storage of the session history and reporting the charging time. The specific execution path is determined according to the server policy and the user service setting. If the CPM Server accepts the network storage request for the session, the signaling manager sends a response message SIP 200 OK to the SIP/IP Core.

Step 4: The SIP/IP Core forwards the SIP 200 OK to the CPM Client A.

Step 5: The session between the user A and the user B continues. The CPM Client A sends a MSRP SEND message to the CPM Server. This message is received and processed by the media plane which has been allocated when the session is established in the CPM Server. Since the network storage entity has participated in the session, the media plane communicates the received MSRP SEND message to the network storage entity under the control of the storage controller, so as to actually store the history of the session. If the message is stored successfully, the storage controller sends a response message SIP 200 OK to the session controller.

Step 6 to Step 8: The media plane in the CPM Server sends the received MSRP SEND message to the CPM Client B via the SIP/IP Core. If the transmission of the message is successful, the CPM Client B returns a response message SIP 200 OK to CPM Client A via the media plane.

Step 9 to Step 12: The CPM Client B sends the MSRP SEND message to the CPM Client A via the CPM Server. Similarly, the storage controller receives the message and stores the message into the network storage entity. Similarly the storage controller receives the MSRP SEND message and stores the message into the network storage entity.

Step 13 to Step 14: The user A requests to terminate storing the history of the session. The CPM Client A sends a SIP REFER request message to the CPM Server via the SIP/IP Core. The Refer Method is set as "BYE".

Step 15 to Step 16: When the CPM Server receives the SIP REFER, the signaling manager in the CPM Server performs signaling analysis on the message, determines that the message is a session network storage termination request, and branches the message to the storage controller so as to notify the storage controller to quit the session being made. At the same time, the session controller applies a session control policy which includes transactions such as updating the session state, determining the network storage of the history of the session and reporting the charging time. The specific execution path is determined according to the server policy and the user service setting. If the CPM server accepts the session network storage termination request, the signaling manager returns a response message SIP 200 OK to the CPM Client A via the SIP/IP Core.

At this time, the contents of the session between the users A and B will not be stored on the network side by the CPM Server while the session between the CPM users A and B will proceed.

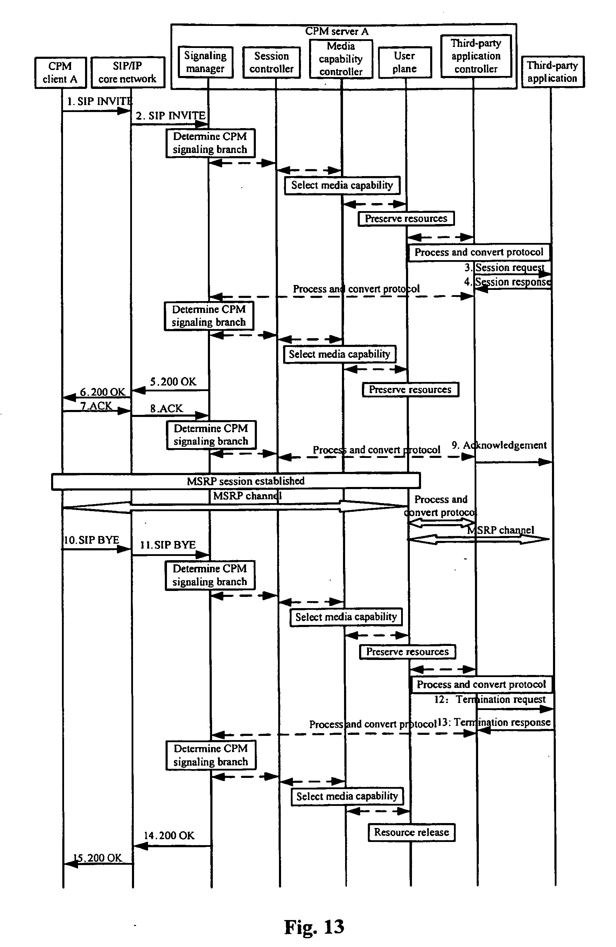

Example 5: The CPM server is provided with a third-party application controller to support message delivery or session between a CPM user and a third-party application. The CPM Client A makes a session with a third-party application. As shown in Figure 13 (in which not all functional entities of the CPM Server are shown), the main procedure is described as follows.

Step 1 to Step 2: The CPM Client A sends a SIP INVITE message to the CPM Server via the SIP/IP Core. When the CPM Server receives the message, the signaling manager in the CPM Server analyzes the message and determines that the message is a session invitation to a third-party application. On one hand the signaling manager branches the message to a session controller in the CPM Server for applying a session control policy to the message. The session control policy includes transactions such as updating the session state, determining the network storage of a history of the session and reporting the charging time. The specific execution path is determined according to the server policy and the user service setting. On the other hand, the signaling manager preserves resources such as transport port at the user plane. In addition, to support interaction with the third-party application, the third-party application controller in the CPM Server performs necessary interfacing operations such as protocol translation and signaling format conversion on the message.

Step 3: The third-party application server in the CPM Server sends an Invite Request message resulting from conversion to the third-party application.

Step 4: The third-party application returns a response message Invite Response to the third-application controller in the CPM Server. Upon receipt of the response message, the CPM Server performs necessary interfacing operations such as protocol translation and signaling format conversion on the message. The signaling manager performs signaling analysis on the message to make a decision, and then branches the message to the session controller and processes the message in cooperation with the session media plane.

Step 5 to Step 6: The signaling controller in the CPM Server sends a response message SIP 200 OK to the Client A via the SIP/IP Core.

Step 7 to Step 8: The CPM Client A sends an ACK acknowledgement message to the CPM Server via the SIP/IP Core. When the CPM Server receives the ACK message, the signaling controller in the CPM Server performs signaling analysis on the message and determines that the message is a session invitation to a third-party application. On one hand the signaling manager branches the message to the session controller for applying a session control policy to the message. The session control policy includes transactions such as updating the session state, determining the network storage of the history of the session and reporting the charging time. The specific execution path is determined according to the server policy and the user service setting. In addition, to support interaction with the third-party application, the third-party application controller in the CPM Server performs necessary interfacing operations such as protocol translation and signaling format conversion on the message.

Step 9: The third-party application controller in the CPM Server sends the response message being converted to the third-party application.

At this time the session between the user A and the third-party application has been established successfully. In this example the CPM Client A and the third-party application make a Messaging session based on an MSRP channel with the support of the media plane and the third-party application controller of the CPM Server.

When the user A terminates the session with the third-party application, the procedure is implemented as follows.

Step 10 to Step 11: The CPM Client A sends a SIP BYE message to the third-party application via the SIP/IP Core and the CPM Server. The third-party application controller in the CPM Server performs interfacing operations such as protocol translation and signaling format conversion similar to those in the above described steps.

Step 12: The third-party application controller in the CPM Server sends a session terminate message Bye Request being converted to the third-party application.

Step 13: The third-party application returns a response message Bye Response to the third-party application controller in the CPM Server.

Step 14 to Step 15: The third-party application controller in the CPM Server translates the response message into a SIP 200 OK message and the signaling manager returns the SIP 200 OK message to the CPM Client A via the SIP/IP Core.

At this time the session between the user A and the third-party application is terminated. The CPM Server releases respective communication resources.

The interaction with the third-party application may be implemented by two approaches. One approach is that the client communicates a converged message with the third-party application. The other approach is that the client makes a session with the third-party application. The processing procedures of the two implementation approaches are similar to the above implementation procedure in principle.

The interconnection of the CPM system and a non-CPM system is relatively simple. The procedures for intercommunication of messages or sessions are similar to the procedures in the above Example 1 and Example 2. An interconnection entity serves as a participant of message delivery or a session. The interconnection entity sends a message to a server of the CPM system or the non-CPM system. The CPM server or the non-CPM server sends the message to the corresponding terminal. In this procedure, the interconnection entity performs protocol conversion and route searching as well as address translation similarly to the corresponding procedures as described in the above examples, which will not be repeated here.

When the CPM users are not in the same home network, the procedures for implementing a CPM service are similar to the procedures as described in the above examples, which will not be repeated here.

### A Second Embodiment

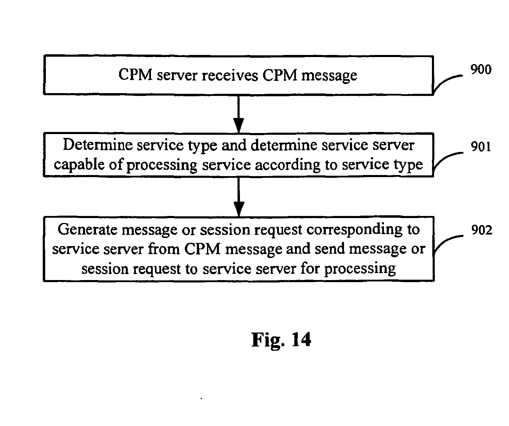

As shown in Figure 14, a main procedure for implementing converged IP messaging according to this embodiment includes the following steps.

Step 900: A CPM server receives a CPM message.

Step 901: The CPM server determines the service type according to the CPM message and determines a service server capable of processing the type of service according to the service type.

Step 902: The CPM server generates a message or a session request corresponding to the other service server from the CPM message and sends the message or session request to the service server for processing. Upon receipt of a CPM message from the service server, the CPM server sends the CPM message to the CPM client.

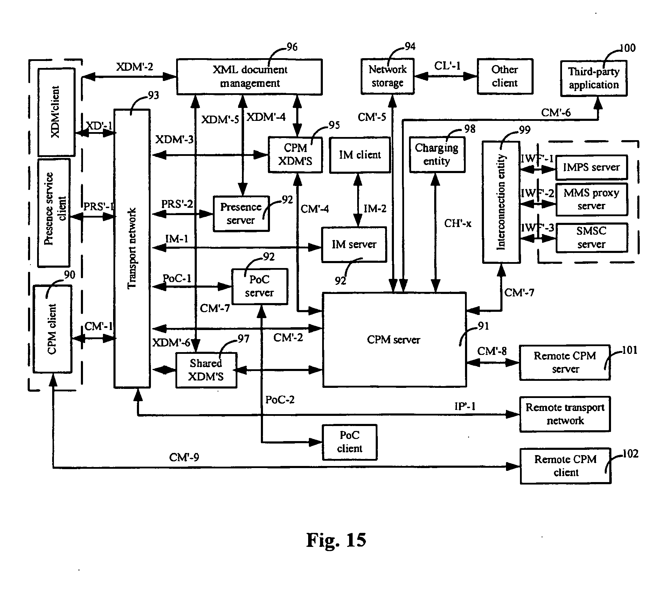

This embodiment provides another converged IP messaging system. As shown in Figure 15, the system includes: a CPM client 90, configured to create a corresponding CPM message according to the service type of the CPM service to be performed and send the corresponding CPM message via a transport network 93, and further configured to process a received CPM message according to a processing procedure corresponding to the service type of the CPM message; a CPM server 91, configured to determine the service type according to a received CPM message and determine a service server capable of processing the type of service according to the service type, and further configured to generate a message and/or a session request corresponding to the service server from the CPM message and send the message or session request to the service server via the transport network 93; multiple service servers 92, configured to process the message and/or session request; and the transport network 93, configured to transfer messages between the CPM client 90 and the CPM server 91 and between the service servers 92 and the CPM server 91.

The service servers 92 are existing service servers including a presence server, an IM server, a PoC server, a voice service server, an audio server, an email server, an IMPS server, an MMS server, an SMS server and the like.

The transport network 93 may be a packet switched public data network, a circuit switched public data network, a network supporting Transmission Control Protocol/Internet Protocol, a general packet radio service network, a digital wireless phone network, an analog wireless phone network, a public switched telephone network, an integrated services digital network or a broadband integrated services digital network. This embodiment takes a SIP/IP core network as an example of the transport network 93.

The CPM client 90 allows a user to access a CPM service and can be deployed in a mobile or fixed terminal or an Internet accessing device. The CPM client supports the following functions:

1. performing the processes of registration and authentication from the CPM client to a SIP/IP Core;

2. sending/receiving CPM messages to/from other CPM clients and providing the user with a notification of the arrival of a message or an invitation;

3. allowing the user to set services according to different devices, contact addresses and media types; and

4. providing network-stored messages, multimedia contents and a user local storage and synchronization capability.

The CPM server 91 is configured to activate a corresponding application server when the client initiates a CPM message or session. The CPM server may be a proxy server and implement management functions such as selecting and distributing.

In implementing functions the CPM server 91 serves as a general proxy of the whole converged messaging service and converges and distributes signaling and media. The CPM server 91 parses the type of the server to which the request is to be sent according to a request of the initiator and selects a corresponding messaging server. The corresponding messaging server forwards the corresponding message or request to a corresponding CPM server 91 according to the received request and the corresponding CPM server 91 forwards the message or request to a corresponding client.

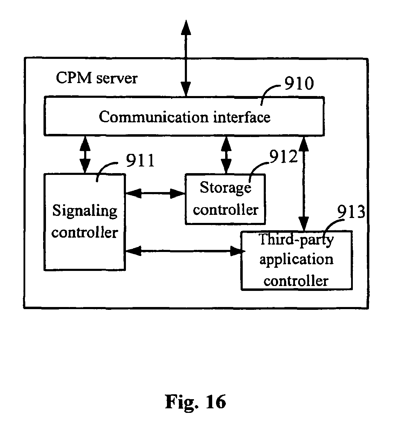

As shown in Figure 16, the CPM server 91 includes: a communication interface 910, configured to receive or send a message; a signaling controller 911, configured to determine the service type according to a received CPM message and determine a service server to process the type of service according to the service type, and further configured to generate a message and/or a session corresponding to the service server from the CPM message and send the generated message and/or session to the service server; a storage controller 912, configured to manage the contents of a CPM message, a history of a session and multimedia data possibly contained in the message or the history of the session stored on the network side; a third-party application controller 93, configured to receive a message or session control signaling sent by the signaling controller 911, perform protocol processing and conversion on the message or session control signaling and then send the message or session control signaling to a third-party application, and further configured to receive a message or session control signaling send by the third-party application and perform protocol processing and conversion on the message or session control signaling and then send the message or session control signaling to the signaling controller 911.

The communication 910 is configured for the communication between the functional entities in the system, and defined to include the followings.

### 1. A first interface (CM'-2 interface)

The first interface is based on the SIP protocol, used for the communication between the CPM server and the SIP/IP core network, and supports:
- transferring CPM session signaling between the CPM client and the CPM server;
- exchanging messages between the CPM client and the CPM server;
- providing an address parsing service;
- distributing and subscribing to presence information for the CPM server by using a presence functional entity;
- subscribing to a notification of modifications of the XML documents stored in CPM XML Document Management Server (XDMS) or Shared XDMS;
- subscribing to notification of conference event in the CPM server; and
- distributing CPM user service setting.

### 2. A second interface (CM'-3 interface)

The second interface is configured for the communication between the CPM client and the CPM server, and may implement transmission protocols required by media communication, such as Message Session Relay Protocol (MSRP), Real-time Transport Protocol (RTP)/Real-time Transport Control Protocol (RTCP) and Hyper Text Transport Protocol (HTTP), and supports:
- converged message (message, email, document) transferring;
- simplex/duplex voice conference; and
- streaming media transport based on audio and video encoding formats.

### 3. The third interface (CM'-4 interface)

The third interface is based on the XCAP protocol, used for the communication between the CPM server and the CPM XDMS, and supports:
- generating a CPM-specific XML document; and
- performing management operations such as searching, updating and deleting on the XML document.

### The fourth interface (CM'-5 interface)

The fourth interface is configured for the communication between the CPM server and the network storage entity, and may implement transmission protocols required by the media communication, such as MSRP, RTP and HTTP, and supports:
- storing and retrieving a uniform user contact list independent from the communication service technologies;
- storing and retrieving a separate message and a separate history of a session; and
- storing and retrieving multimedia data.

### 5. The fifth interface (CM'-6 interface)

The fifth interface is based on a specific protocol such as SIP, used for the communication between the CPM server and a third-party application, and supports:
- message exchange independent from media type between the CPM server and a third-party application.

### 6. The sixth interface (CM'-7 interface)

The sixth interface is configured for the communication between the CPM server and an interconnection entity, and supports:
- message exchange independent from media type between the CPM server and a non-CPM system; and
- maintaining the protocol of a non-CPM system unchanged.

### 7. A seventh interface (CM-10 interface)

The seventh interface is based on the XCAP protocol, configured for the communication between the CPM server and the Shared XDMS, and supports:
- searching for group-specific information in a CPM service;
- searching for user setting information in a CPM service; and
- searching for URI list information in a CPM service.

### 8. An eighth interface (CH'-x interface)

The eighth interface is configured for the communication between the CPM server and a charging entity, and supports:
- offline and online charging functions;
- reporting a charging event after CPM service communication; and
- reporting an intermediate charging event during CPM service communication.

### 9. A ninth interface (CM'-8 interface)

The ninth interface is based on the media transport protocol, configured for the communication between the CPM server and a remote CPM server, and may implement various protocols required by the media communication, such as MSRP, RTP and HTTP, and supports:
- converged message (message, email, document) transferring;
- simplex/duplex voice conference; and
- streaming media transport based on various audio and video encoding format.

### 10. A tenth interface (CM'-1 interface)

The tenth interface is based on the SIP protocol, configured for the communication between the CPM client and the SIP/IP core network, and supports:
- transferring CPM session signaling between the CPM client and the CPM server;
- exchanging messages between the CPM client and the CPM server;
- providing server finding and address parsing services;
- providing SIP compression function;
- performing authentication and authorization processes according to a service to which a CPM user subscribes; and
- providing registration of CPM user terminal.

### 11. An eleventh interface (CM'-9 interface)

The eleventh interface is based on the media transport protocol, configured for the communication between the CPM client and a remote CPM client, and may implement various protocols required by the media communication, such as MSRP, RTP and HTTP, and supports:
- converged message (message, email, document) transferring;
- simplex/duplex voice conference; and
- streaming media transport based on various audio and video encoding format.

### 12. A twelfth interface (XDM'-3 interface)

The twelfth interface is based on the XCAP protocol, configured for the communication between the CPM XDMS and the SIP/IP core network, and supports:
- subscribing to modifications of the XML documents stored on the network side; and
- notifying the modifications of the XML documents stored on the network side.

### 13. A thirteenth interface (XDM-4 interface)

The thirteenth interface is based on the XCAP protocol, configured for the communication between the CPM XDMS and the XML document management entity, and supports:
- CPM service-specific XML document management functions (such as creating, updating, searching and deleting).

### 14. LF'-1 interface

This interface is configured for the communication between a non-CPM system and the network storage entity, and may implement various protocols required by the media communication, such as MSRP, RTP/RTCP and HTTP, and supports:
- storing and retrieving a uniform user contact list independent from the communication service technologies;
- storing and retrieving a separate message and a separate history of a session; and
- storing and retrieving multimedia data.

### 15. CL'-1 interface

This interface is configured for the communication between a non-CPM client and the network storage entity, and may implement various protocols required by the media communication, such as MSRP, RTP/RTCP and HTTP, and supports:
- storing and retrieving a uniform user contact list independent from the communication service technologies;
- storing and retrieving a separate message and a separate history of a session; and
- storing and retrieving multimedia data.

### 16. IP'-1 interface

This interface is based on the SIP protocol, configured for the communication between the SIP/IP core network and a remote SIP/IP core network, and supports:
- communicating and forwarding the SIP signaling between the SIP/IP core networks; and
- transferring charging information.

### 17. XDM'-1 interface

This interface is based on the SIP protocol, configured for the communication between an XDM client and the SIP/IP core network, and supports:
- subscribing to modifications of the XML documents stored on the network side; and
- notifying the modifications of the XML documents stored on the network side.

### 18. XDM'-2 interface

This interface is based on the XCAP protocol, configured for the communication between the XDM client and the XML document management entity, and supports:
- XML document management functions (such as creating, updating, searching and deleting); and
- bi-directional authentication between the XDM client and the XML document management entity.

### 19. XDM'-5 interface

This interface is based on the XCAP protocol, configured for the communication between the presence server and the XML document management entity, and supports:
- presence service-specific XML document management functions (such as creating, updating, searching and deleting).

### 20. XDM'-6 interface

This interface is based on the SIP protocol, configured for the communication between the Shared XDMS and the SIP/IP core network, and supports:
- subscribing to modifications of the XML documents stored on the network side; and
- notifying the modifications of the XML documents stored on the network side.

### 21. XDM'-7 interface

This interface is based on the XCAP protocol, configured for the communication between the Shared XDMS and the XML document management entity, and supports:
- Shared specific XML document management functions (such as creating, updating, searching and deleting).

### 22. PRS'-1 interface

This interface is based on the SIP protocol, configured for the communication between a presence client and the SIP/IP core network, and supports:
- distributing presence information;
- subscribing to presence information and receiving a notification; and
- SIP compression and de-compression.

### 23. PRS'-2 interface

This interface is based on the SIP protocol, configured for the communication between the presence server and the SIP/IP core network, and supports:
- distributing presence information;
- subscribing to presence information and receiving a notification; and
- subscribing to modifications of presence service-specific XML documents.

### 24. IWF'-1 interface

This interface is based on the HTTP protocol, configured for the communication between the interconnection entity and an IMPS server, and supports:
- message exchange independent from media type between the interconnection functional entity and the IMPS server.

### 25. IWF'-2 interface

This interface is based on the HTTP protocol, configured for the communication between the interconnection entity and an MMS Proxy/Relay, and supports:
- message exchange independent from media type between the interconnection functional entity and the MMS Proxy/Relay.

### 26. IWF'-3 interface

This interface is based on the Short Message Peer-to-Peer (SMPP) protocol, configured for the communication between the interconnection entity and a Short Message Service Center (SMSC) server, and supports:
- message exchange independent from media type between the interconnection entity and the SMSC server.

The interfaces described in the above sections 16 to 26 have been existed in the existing messaging system but now provide support for the deployment of the CPM service.

The CPM system according to this embodiment also includes the following functional entities.

A network storage entity 94 is configured to collectively store user data, and provides the following functions: a uniform user contact list independent from the communication service technologies, a separate message, history list and multimedia data; all network-stored data may be synchronized to a user terminal and can deploy a corresponding storage capability according to the user service setting and the operator policy.

A CPM XDMS entity 95 is configured to store specific information in XML document format and associated with a CPM service kept by a CPM user.

An XDM document management entity 96 is configured to provide access and control of a network-stored XML document for a CPM user and manage a CPM-specific XML document (such as a session history data document collectively stored by CPM or a user contact list in the Shared XDMS) stored on the network side, and provide an access control point of a network-stored XML document for an XDM client and perform authentication of the XDM client, XCAP route requesting and network-stored XML document searching.

A Shared XDMS entity 97 is configured to provide access and control of an XML document shared by OMA service functional entities (OMA Enabler) including the CPM functional entity.

Both the CPM XDMS entity 95 and the Shared XDMS entity 97 serve as an XCAP server to provide XML document management for CPM users.

A charging entity 98 is configured to receive charging time information reported from a CPM service and provide charging basis for the operator.

An interconnection entity 99 is configured to define standard interfaces for the interconnection between the CPM system and other systems, perform corresponding format conversion between a CPM message and a non-CPM message, and allow seamless interaction between a CPM user and a user of other non-CPM messaging system.

A third-party application entity 100 is configured to provide a third-party application service for a CPM user.

One or more remote CPM servers 101 are configured to perform remote CPM service interaction with the CPM server.

One or more remote CPM clients 102 are configured to perform remote CPM service interaction with the CPM client.

The above functional entities communicate with each other via the communication interfaces as defined above to implement service interaction.

The technical solutions according to the embodiments of the present invention will be described in detail by way of example in conjunction with the accompanying drawings.

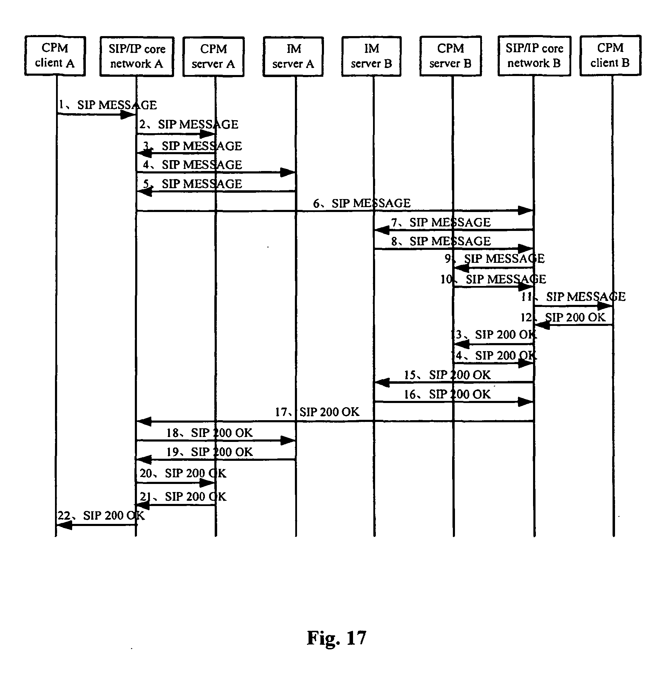

Example 1: the CPM Servers A and B are respectively CPM servers of the home networks of the CPM users A and B, the IM Servers A and B are respectively instant messaging servers of the home networks of the CPM users A and B, and the SIP/IP Cores A and B are respectively SIP signaling transport networks of the home networks of the users A and B. As shown in Figure 17, a procedure for transferring a message between the CPM users A and B is described as follows.

Step 1: The users A and B want to chat with each other, and the CPM Client A sends a SIP MESSAGE to the SIP/IP Core A of its home network. The SIP MESSAGE can carry a CPM Feature Tag such as Accept-Contact: +g.cpm. The SIP/IP Core A identifies according to the feature tag that the SIP MESSAGE belongs to a CPM service.

Step 2: The SIP/Core A identifies according to the Accept-Contact: +g.cpm that the message is a CPM service request, and forwards the message to the CPM Server A.

Step 3: The CPM Server A receives the SIP MESSAGE and analyzes this message to determine that it is a message delivery request, and determines that the existing IM service can meet the requirements of message delivery. Then the CPM Server A adds a CPM reuse IM Feature Tag such as Accept-Contact: +g.cpmonim to the SIP MESSAGE and sends the message to the SIP/IP Core A.

Step 4: The SIP/Core A identifies according to the feature tag Accept-Contact: +g.cpmonim that the message is a CPM reuse IM message request and forwards the message to the IM Server A.

Step 5 to Step 7: Upon receipt of the SIP MESSAGE, the IM Server A processes the message according to a formal IM service logic, obtains the domain of the home network of the target user B by analyzing the Request URI in the message, and routes the SIP MESSAGE to the IM Server B in the home network of the user B via the SIP/IP Cores A and B.

Step 8: Upon receipt of the SIP MESSAGE, the IM Server B processes the message according to a formal IM service logic and then sends the message to the SIP/IP Core B.

Step 9: The SIP/IP Core B identifies according to the feature tag Accept-Contact: +g.cpm that the message is a CPM service request, and forwards the message to the CPM Server B.

Step 10 to Step 11: The CPM Server B forwards the SIP MESSAGE to the CPM Client B via the SIP/IP Core B.

Step 12 to Step 13: The CPM Client B sends a response message SIP 200 OK to the CPM Server B via the SIP/IP Core B.

Step 14 to Step 15: The CPM Server B sends the SIP 200 OK to the IM Server B via the SIP/IP Core B.

Step 16 to Step 18: The IM Server B sends a SIP 200 OK to the IM Server A via the SIP/IP Core B and the SIP/IP Core A.

Step 19 to Step 20: The IM Server A sends a SIP 200 OK to the CPM Server A via the SIP/IP Core A.

Step 21 to Step 22: The CPM Server A sends the SIP 200 OK to the CPM Client A via the SIP/IP Core A.

Example 2: the CPM Servers A and B are respectively CPM servers of the home networks of the CPM users A and B, the IM Servers A and B and the PoC Servers A and B are respectively instant messaging servers and PoC servers of the home networks of the CPM users A and B, and the SIP/IP Cores A and B are respectively SIP signaling transport networks of the home networks of the users A and B.

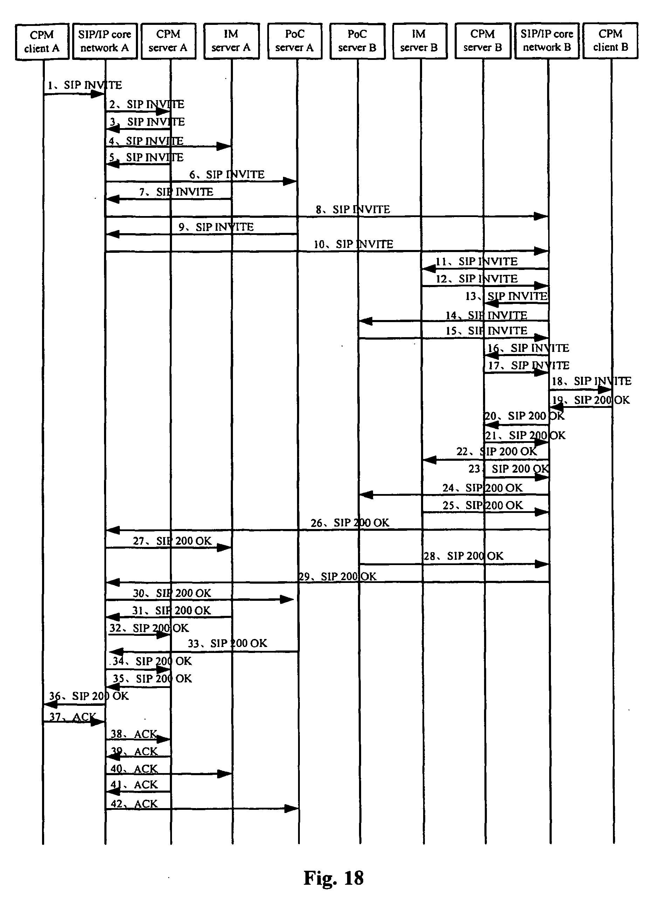

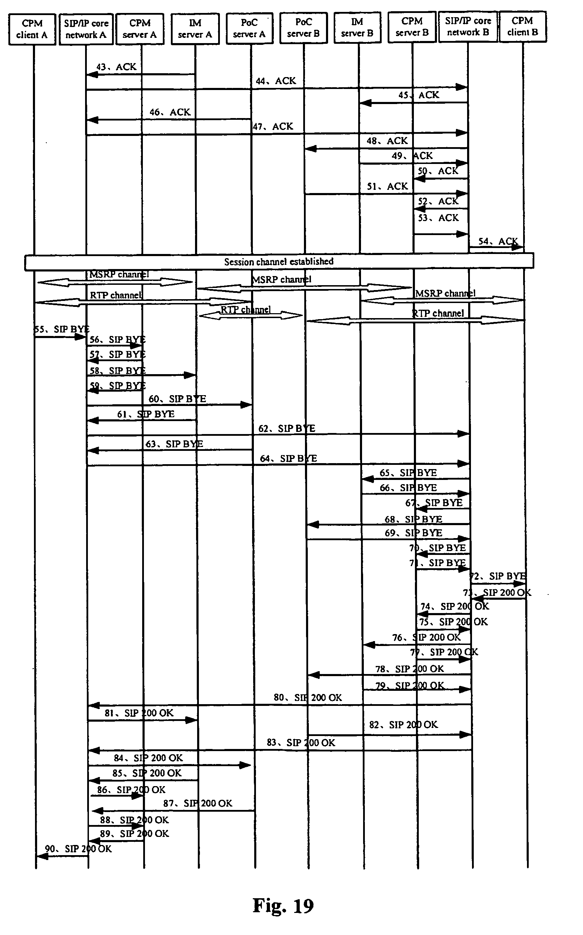

In this embodiment it is assumed that a multimedia session initiated by the user A involves a text message and a half-duplex voice session. The existing IM and PoC services can meet the requirements of such a session and thus the service capabilities of the IM and PoC servers can be reused. As shown in Figures 18 and 19, a procedure for message delivery between the users A and B is described as follows.

Step 1: The user A wants to initiate a multimedia session with the user B. The CPM Client A sends a SIP INVITE request to the SIP/IP Core A of its home network. The SIP INVITE message can carry a CPM Feature Tag such as Accept-Contact: +g.cpm. The SIP/IP Core A identifies according to the feature tag that the SIP INVITE belongs to a CPM Service.

Step 2: The SIP/IP Core A identifies according to the Accept-Contact: +g.cpm that the message is a CPM service request, and forwards the message to the CPM Server A.

The CPM Server A analyzes the received SIP INVITE and generates a SIP INVITE request for establishing a text message session and a SIP INVITE request for establishing a half-duplex voice session respectively according to the session establishment parameters contained in the received SIP INVITE, and sends the generated SIP INVITE requests to the exiting IM server and PoC server. There are a special IM Feature Tag and a special PoC Feature Tag are respectively added to the generated SIP INVITE messages to indicate special setting for IM and PoC services reused by the CPM server. These two generated SIP INVITE also include the same session identifier and sequence numbers indicating the SIP INVITE messages newly generated by the CPM server. For example, in the present embodiment, the CPM Server A newly generates the two SIP INVITE according to the received SIP INVITE request, and the sequence number of the SIP INVITE to be sent to the IM Server may be set as 1/2 and the sequence number of the SIP INVITE to be sent to the PoC Server may be set as 2/2.

Step 3 to Step 4: The CPM Server A adds CPM reuse IM Feature Tag such as Accept-Contact: +g.cpmonim to one of the newly generated SIP INVITE messages and send the SIP INVITE message to the IM Server A via the SIP/IP Core A (the SIP/IP Core A learns to send the SIP INVITE to the IM Server A according to the IM Feature Tag).

Step 5 to Step 6: The CPM Server A adds CPM reuse PoC Feature Tag such as Accept-Contact: +g.cpmonpoc to the other of the newly generated SIP INVITE messages and send the SIP INVITE message to the PoC Server A via the SIP/IP Core A (the SIP/IP Core A learns to send the SIP INVITE to the PoC Server A according to the PoC Feature Tag).

Step 7 to Step 9: Upon receipt of the SIP INVITE request, the IM Server A processes the request according to a formal IM service logic, obtains the domain of the home network of the target user B by analyzing the Request URI in the request, and routes the SIP MESSAGE to the IM Server B in the home network of the user B via the SIP/IP Cores A and B.

Step 10 to Step 12: Upon receipt of the SIP INVITE request, the PoC Server A processes the request according to a formal PoC service logic, obtains the domain of the home network of the target user B by analyzing the Request URI in the request, and routes the SIP MESSAGE to the PoC Server B in the home network of the user B via the SIP/IP Cores A and B.

Step 13 to Step 14: Upon receipt of the SIP INVITE request, the IM Server B processes the request according to a formal IM service logic and sends the request to the SIP/IP Core B. The SIP/IP Core B identifies according to the Accept-Contact: +g.cpm that the request is a CPM service request and forwards the request to the CPM Server B.

Step 15 to Step 16: Upon receipt of the SIP INVITE request, the PoC Server B processes the request according to a formal PoC service logic and sends the request to the SIP/IP Core B. The SIP/IP Core B identifies according to the Accept-Contact: +g.cpm that the request is a CPM service request and forwards the request to the CPM Server B.

Step 17 to Step 18: After subsequently receiving two SIP INVITE requests with the same session identifier, the CPM Server B determines in conjunction with the respective subsequence numbers contained in the SIP INVITE requests that these two SIP INVITE requests are generated from the same CPM SIP INVITE. The CPM Server B restores the SIP INVITE request initiated by the user A according to the session establishment parameters carried in the two SIP INVITE requests, and forwards the restored SIP INVITE request to the CPM Client B via the SIP/IP Core B.

Step 19 to Step 20: The CPM Client B returns a response message SIP 200 OK to the CPM Server B via the SIP/IP Core B.

Step 21 to Step 22: The CPM Server B sends the SIP 200 OK to the IM Server B via the SIP/IP Core A according to the CPM reuse IM Feature Tag such as Accept-Contact: +g.cpmonim contained in the SIP 200 OK.

Step 23 to Step 24: The CPM Server B sends the SIP 200 OK to the PoC Server B via the SIP/IP Core A according to the CPM reuse PoC Feature Tag such as Accept-Contact: +g.cpmonpoc contained in the SIP 200 OK.

Step 25 to Step 27: Upon receipt of the SIP 200 OK response, the IM Server B processes the response according to a formal IM service logic and sends a SIP 200 OK to the IM Server A in the home network of the user A via the SIP/IP Cores A and B.

Step 28 to Step 30: Upon receipt of the SIP 200 OK response, the PoC Server B processes the response according to a formal PoC service logic and sends a SIP 200 OK to the PoC Server A in the home network of the user A via the SIP/IP Cores A and B.

Step 31 to Step 32: Upon receipt of the SIP 200 OK response, the IM Server A processes the response according to a formal IM service logic, identifies that the response corresponds to the CPM service request according to the Accept-Contact: +g.cpm, and returns a response to the CPM Server A via the SIP/IP Core A.

Step 33 to Step 34: Upon receipt of the SIP 200 OK response, the PoC Server A processes the response according to a formal PoC service logic, identifies that the response corresponds to the CPM service request according to the Accept-Contact: +g.cpm, and returns a response to the CPM Server A via the SIP/IP Core A.

Step 35 to Step 36: After subsequently receiving two SIP 200 OK responses with the same session identifier, the CPM Server A determines in conjunction with the respective subsequence numbers contained in the SIP 200 OK responses that these two responses are responses for the same CPM SIP INVITE. The CPM Server A generates a new SIP 200 OK corresponding to the initial CPM SIP INVITE request from the two received responses, and forwards the new SIP 200 OK message to the CPM Client A via the SIP/IP Core A.

Step 37 to Step 54: Similar to the procedure for processing the SIP INVITE message as described above, the CPM Client A returns an acknowledgement message ACK to the CPM Client B.

At this time a session channel involving a text message and a voice session has been established. The CPM Clients A and B can make a session through the MSRP channels established between the CPM Clients A and B and the respective IM Servers and the RTP channels established between CPM Clients A and B and the respective PoC Servers.

When a CPM user requests to terminate the session, the client of the CPM user sends a SIP BYE request to the client of the target user. The procedure for processing the message transferred between the two clients are similar to that for processing the SIP INVITE message as described above and will not be repeated here.

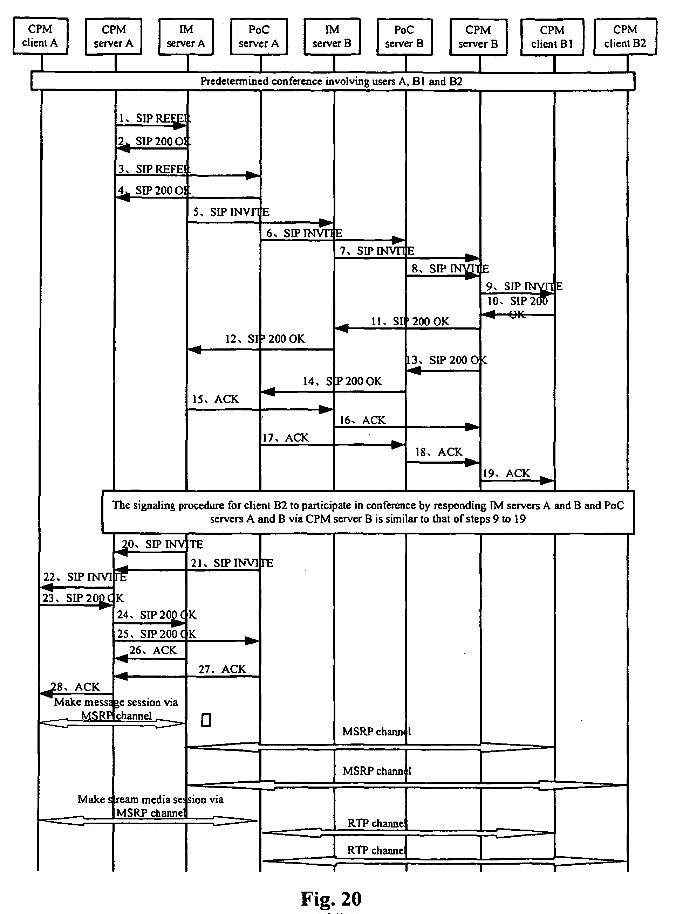

Example 3: The CPM Servers A and B are respectively CPM servers of the home networks of the CPM users A and B, the IM Server A, and the PoC Server A and the VoIP Server A are respectively instant messaging server, PoC server and VoIP server of the home network of the CPM user A. The CPM server initiates a conference and sends a message to the IM server, the PoC server and the VoIP server respectively to activate the conference. The service servers establish different types of sub-conferences. For example, the IM server - establishes a basic message type of conference, the PoC server establishes a half-duplex conference and the VoIP server establishes a voice or video conference. The CPM server converges the conferences into one conference stream and sends the conference stream to a corresponding CPM client. As shown in Figure 20, a procedure for making a multimedia conference between CPM users is described as follows.

Step 1 to Step 4: The CPM Server A activates the conference according to a predetermined conference policy. The CPM Server A finds that the service required by the conference includes a message session and a half-duplex voice session, and sends SIP REFER messages respectively to the IM Servers A and B and the PoC Server A to invite the users A, B1 and B2 to participate in the conference. The messages each carry a CPM Feature Tag and are designated with respective sequence numbers.

Step 5 to Step 8: The IM Server A and the PoC Server A establish their respective conference Focuses, and sends a SIP INVITE message to each participant of the conference via the CPM server since the received messages each carry a CPM Feature Tag. The SIP INVITE messages carry the same CPM conference Feature Tag. Since the received SIP INVITE messages targeted to the client A in the local domain carry the same CPM conference Feature Tag, the CPM server A converges the two SIP INVITE messages according to the subsequence numbers and the Feature Tag until receiving the two SIP INVITE messages and then forwards the converged message to the client A. The IM Server A and the PoC Server A obtain the routes to the client B1 and B2 by searching and sends the invitation message to the IM Server B and the PoC Server B.

Step 9: The CPM Server B converges the two invitation messages targeted to the clients B1 and B2 into one invitation message and modifies the IM and PoC Feature Tags to be a CPM Feature Tag in the converged invitation message, and sends the converged invitation message to the CPM client B1.

Step 10 to Step 19: The CPM Client B1 sends a response message to the IM Server A and the PoC Server A via the CPM Server B and the IM Server B and the PoC Server B, participates in the conference and establishes a conference session media channel. The procedure for the CPM Client B2 to participate in the conference and establish a conference session media channel is similar to that for the CPM Client B2 as described above and will not be repeated here.

Step 20 to Step 28: The IM Server A and the PoC Server A invite the CPM Client A to participate in the conference by sending a SIP INVITE message to the CPM Client A and finally establishes a conference session media channel between the conference Focus and the CPM Client A.

At this time the CPM Clients A, B1 and B2 participate in the message session conference held by the IM Server A and the half-duplex voice session conference held by the PoC Server A respectively under the control of the CPM Servers A and B. The users communicate with each other through the conference session channels as established above.

For the CPM system according to the second embodiment, when to operate contents of a message, a history of a session and media data contained in the message and the history of the session on the network side, the service servers specifically operate the contents of the CPM message, the history of the session and the media data contained in the CPM message and the history of the session stored in the network storage entity according to the signaling requests of the CPM Server. For example, when a separate SIP MESSAGE is sent, the unified storage portion in the network stores the CPM message into itself via the interfaces with the IM server and the PoC server according to the setting and preference of the user. When to store the contents of a session, the unified storage portion stores the corresponding message or history of the session into the network storage unit via the interfaces with the IM server and the PoC server.

In the present embodiment, when communicating with a third-party application, the CPM server communicates with the third party via an interface and the SP. The third-party application equals to a participant of the session or message intercommunication. The detailed procedure for this will not be repeated here.

### A Third Embodiment

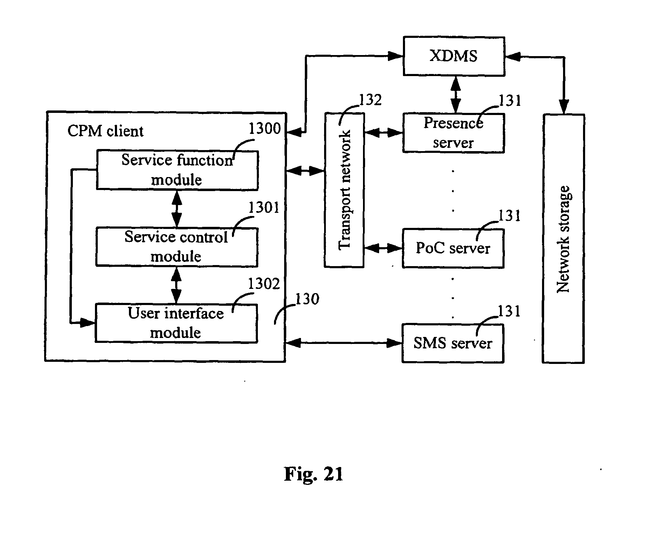

A CPM system for implementing converged IP messaging is provided in this embodiment. As shown in Figure 21, the system includes: a CPM client 130, configured to determine a service type according to a received message and a message initiated by a CPM user, and after processing the type of service according to the service type, send the message to a corresponding service server; multiple service servers 131, configured to receive messages sent by the CPM client 130 and send messages to the CPM client 130; and the transport network 132, configured to transfer messages between the CPM client 130 and the service servers 131.

The service servers 131 are existing service servers including a presence server, an IM server, a PoC server, a voice service server, an audio server, an email server, an IMPS server, an MMS server, an SMS server and the like.

The transport network 132 may be a packet switched public data network, a circuit switched public data network, a network supporting Transmission Control Protocol/Internet Protocol, a general packet radio service network, a digital wireless phone network, an analog wireless phone network, a public switched telephone network, an integrated services digital network or a broadband integrated services digital network. This embodiment takes a SIP/IP core network as an example of the transport network 132.

The CPM client 130 includes: a service function module 1300, configured to send a CPM message and receive a CPM message; a service control module 1301, configured to determine the service type according to the received message and trigger a corresponding service function module according to the service type; and a user interface module 1302, configured to send the received message and the message initiated by the user to the service control module.

The service function module 1300 includes one or more of an XDM module, a PRS module, an IM module, a PoC module, a voice module, an audio module, an email module, an SMS module, an MMS module and an IMPS module.

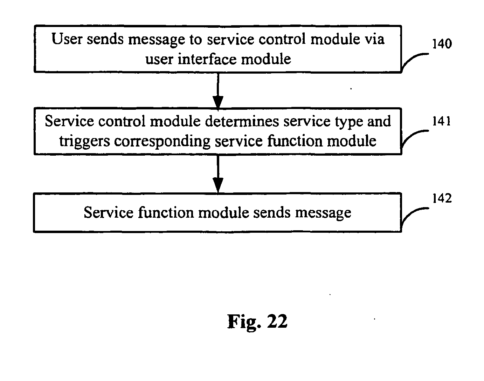

As shown in Figure 22, a procedure for sending a message by a CPM client is described as follows.

Step 140: After editing a message through the user interface module, a user sends the message to the service control module.

Step 141: The service control module determines the service type and determines a service function module to process the type of service according to the service type.

Step 142: The service control module sends the message with a corresponding sending mode.

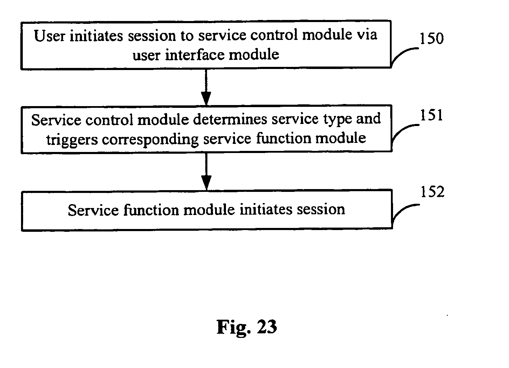

As shown in Figure 23, a procedure for initiating a session by a CPM client is described as follows.

Step 150: A user initiates a session and selects a media type in the session through the user interface module.

Step 151: The service control module determines the service type of the session according to the media type and triggers a service function module to process the service. If the user selects a half-duplex voice session, the service control module selects to trigger the PoC function module. If the user selects to make an instant chat with text, the service control module selects the IM service function module. If the user selects video and text simultaneously, the service control module triggers the video function module and the IM function module simultaneously.

Step 152: The service function module initiates a corresponding session. When a session with multiple service types such as the IM service and the video service, the user interface module converges the two services into one service in the user plane. Accordingly the user can make video chat and text chat simultaneously.

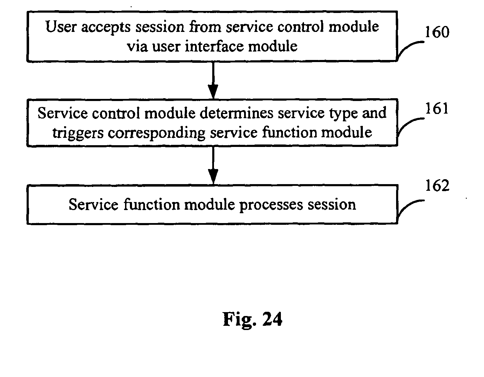

As shown in Figure 24, a procedure for receiving a session by the CPM client is described as follows.

Step 160: The user interface module receives a session request and sends the session request to the service control module.

Step 161: The service control module determines the service type according to the session request and triggers a corresponding service function module.

Step 162: The service function module processes the session.

In the embodiments of the present invention, after receiving a CPM message, the CPM server determines the service type according to the CPM message and performs corresponding signaling control. For a service requiring media transport channel, the CPM server determines the media type of the service, configures corresponding media resources and establishes a media transport channel according to the media type, and processes the contents of the CPM message according to a processing procedure corresponding to the service type. Alternatively, after receiving a CPM message, the CPM server determines the service type according to the CPM message and determines other service server capable of processing the service according to the service type, generates a message and/or session request corresponding to the other service server from the CPM message and sends the generated message and/or session request to the other service server for processing, and after receiving a CPM message from the service server, sends the CPM message to the CPM client. In this way the present invention can provide a converged service experience to users and overcome the overlapping of user experiences due to the intersection of the technology capabilities of the non-CPM services. Therefore the methods according to the embodiments of the present invention can improve the user's service experience.

It is apparent that those skilled in the art can make various modifications and variations to the present invention without departing from the spirit and scope of the present invention. Therefore the present invention intends to cover the modifications and variations if these modifications and variations are within the scope of the claims of the present invention and the equivalents.

## Claims

1. A method for implementing Converged IP Messaging, CPM, **characterized by** comprising the following steps:
receiving, by a CPM server (11), a CPM message;
determining, by the CPM server (11), a service type according to the CPM message and performing corresponding signaling control, wherein the service type comprises at least one of: message delivery service, session service, conference service, a service of operating contents of the CPM message on network side, a service in which a third-party application participates, and a service in which a non-CPM system participates, and wherein for a service requiring a media transport channel, the CPM server (11) determines a media capability of the service and configures corresponding media resources and establishes the media transport channel according to the media capability; and
processing, by the CPM server (11), contents of the CPM message according to a processing procedure corresponding to the service type.

2. The method of claim 1, wherein the CPM server (11) sends the contents of the message to a receiver via a CPM message when the service type is the message delivery service.

3. The method of claim 1, wherein the signaling control refers to select a session type to perform session control involving configuring the media resources and establishing the media transport channel according to a characteristic of a session request, when the service type is the session service.

4. The method of claim 3, wherein the session type comprises at least one of message session, voice session and video session.

5. The method of claim 1, wherein the signaling control comprises establishing a conference, adding a user to participate in the conference to the conference and controlling a session of the conference according to a conference policy, when the service type is conference service.

6. The method of claim 1, wherein the CPM server (11) operates contents of the CPM message, a history of a session and multimedia data possibly contained in the CPM message or the history of the session when the service type is a service of operating the contents of the CPM message on network side, wherein the operating comprises storing, retrieving, deleting and updating.

7. The method of any one of claims 1 to 6, wherein the CPM server (11) further performs protocol processing and conversion on a CPM message received from a third-party application and a CPM message sent to the third-party application when the service type is the service in which the third-party application participates.

8. The method of any one of claims 1 to 6, wherein the CPM server (11) further performs protocol processing and conversion on a CPM message received from a non-CPM system and a CPM message sent to the non-CPM system when the service type is the service in which the non-CPM system participates.

9. A Converged IP Messaging, CPM, server, **characterized by** comprising:
a communication interface (110), configured to receive or send a message;
a control unit (111), configured to determine a service type according to the received CPM message and to perform corresponding signaling control, wherein the service type comprises at least one of: message delivery service, session service, conference service, a service of operating contents of the CPM message on network side, a service in which a third-party application participates, and a service in which a non-CPM system participates; and
a media unit (11.2), configured to determine, .for a service requiring a media transport channel, a media capability of the service, configure corresponding media resources and establish the media transport channel according to the media capability.

10. The CPM server of claim 9, wherein the control unit (111) comprises a signaling manager (30) and a controller, wherein
the signaling manager (30) is configured to determine the service type for the received CPM message and transfer the CPM message to the controller, and perform succeeding processing according to a processing result from the controller; and
the controller is configured to perform the signaling control on the CPM message sent by the signaling manager (30) and return the result to the signaling manager (30).

11. The CPM server of claim 10, wherein the controller comprises at least a message controller (31), a session controller (32) and a storage controller (33), wherein
the message controller (31) is configured to perform corresponding signaling eontrol on the received CPM message and return a processing result to the signaling manager (30); and send an network accessing request to the storage controller (33) when the CPM message carries the network accessing request;
the session controller (32) is configured to forward the received message in a CPM session to the message controller (31) for processing, perform corresponding signaling control on received CPM session control signaling, return a processing result to the signaling manager (30), and send an instruction for performing session media capability control to the media unit (112); and send a request for operating contents of the CPM session to the storage controller (33) when the CPM session requires operating the contents of the CPM session; and
the storage controller (33) is configured to receive operating requests from the message controller (31) and the session controller (32) and operate contents of the CPM message, a history of the CPM session and media data possibly contained in the CPM message or the history of the CPM session on network side, wherein the storage controller retrieves the contents of the CPM session from the media unit (112) when storing the history of the CPM session.

12. The CPM server of claim 10, wherein the control unit further comprises:
a third-party application controller (34), configured to perform protocol processing and conversion and communicate with a third-party application via a fifth interface, wherein the fifth interface supports message transport between the CPM server and the third-party application.

13. The CPM server of claim 9, wherein the communication interface comprises:
a first interface, based on Session Initiation Protocol, SIP, protocol and configured to transfer a CPM message between the CPM server and a transport network; and
a second interface, based on media transport protocol and configured to transfer CPM service media contents between the CPM server (11) and a CPM client (10).

14. The CPM server of claim 13, wherein the communication interface further comprises one or all of the following interfaces:
a third interface, based on XML Configuration Access Protocol, XCAP, protocol and configured for communication between the CPM server and a CPM XML Document Management Server, XDMS, entity (14), and configured to support generating a CPM-specific XML document and operate the XML document; and
a fourth interface, configured for communication between the CPM server (11) and a network storage entity (13), and configured to support storing and retrieving relevant information of a CPM user and storing and retrieving contents of a message, a history of a session and multimedia data possibly contained in the message and the history of the session.

15. The CPM server of claim 13, wherein the communication interface further comprises:
a sixth interface, configured for the communication between the CPM server (11) and an interconnection entity (19), and configured to support message transport between a CPM server (11) and a non-CPM system.

16. A Converged IP Messaging, CPM, system, **characterized by** comprising:
a CPM server (11), configured to determine service type according to a received CPM message from a CPM client (10) and to perform corresponding signaling control and process contents of the CPM message according to a processing procedure corresponding to the service type, wherein the service type comprises at least one of: message delivery service, session service, conference service, a service of operating contents of the CPM message on network side, a service in which a third-party application participates, and a service in which a non-CPM system participates, and wherein for a service requiring a media transport channel, the CPM server configured to determine a media capability of the service and configure corresponding media resources and establish the media transport channel according to the media capability; and
a transport network (12), configured to transfer CPM messages of the CPM client (10) and the CPM server (11).

17. The CPM system of claim 16, wherein the CPM client (10) and the transport network (12) communicate with each other via a Session Initiation Protocol, SIP, protocol-based tenth interface, the tenth interface supporting CPM message transport between the CPM client (10) and the transport network (12), registration of a CPM user terminal and authentication and authorization of a CPM service.

18. The CPM system of claim 16, wherein the CPM client (10) and the CPM server (11) communicate with each other via a media transport protocol-based second interface, the second interface supporting transferring CPM service media contents.

19. The CPM system of claim 16, wherein the CPM server and the transport network (12) communicate with each other via a Session Initiation Protocol, SIP, protocol-based first interface, the first interface supporting the CPM server to distribute and subscribe to presence information and subscribe to a notification of modifications of XML documents.

20. The CPM system of claim 16, wherein the CPM system further comprises:
a CPM XML Document Management Server, XDMS, entity (14), configured to store relevant information recorded by a CPM user in XML document format; communicate with the CPM server (11) via an XML Configuration Access Protocol, XCAP, protocol-based third interface, the third interface supporting generating an XML document for a CPM service and operating the XML document; and communicate with the transport network (12) via an XCAP protocol-based twelfth interface, the twelfth interface supporting subscribing to and notifying modifications of the network-stored XML document.

21. The CPM system of claim 16, wherein the CPM system further comprises:
a network storage entity (13), configured to manage contents of a message, a history of a session and multimedia data; and communicate with the CPM server (11) via a fourth interface, the fourth interface supporting storing and retrieving relevant information of a CPM user and storing and retrieving the contents of the message, the history of the session and multimedia data possibly contained in the message and the history of the session.

22. The CPM system of claim 16, wherein the CPM system further comprises:
a third-party application entity (20), configured to provide a third-party application service for a CPM user; and communicate with the CPM server (11) via a fifth interface, the fifth interface supporting message transport between the CPM server (11) and a third-party application.

23. The CPM system of claim 16, wherein the CPM system further composers:
an interconnection entity (19), configured to perform corresponding format conversion on service data intercommunicated with a non-CPM system; and communicate with the CPM server (11) via a sixth interface, the sixth interface supporting message transport between the CPM server (11) and the non-CPM system.

24. The CPM system of claim 16, wherein the CPM system comprises:
a remote CPM server (21), configured to communicate with the CPM server (11) via a media transport protocol-based ninth interface, the ninth interface supporting transporting CPM service media contents.

25. A computer readable media, embodying computer executable instructions for realizing policy-based routing mode, which, when executed by a machine, is operable to cause the machine to perform all the steps of a method according to any one of claims 1-8.

## Patentansprüche

1. Verfahren zum Implementieren konvergierter IP-Nachrichtenübermittlung (Converged IP Messaging, CPM), **dadurch gekennzeichnet, dass** es die folgenden Schritte umfasst:
Empfangen durch einen CPM-Server (11) einer CPM-Nachricht;
Bestimmen durch den CPM-Server (11) eines Diensttyps gemäß der CPM-Nachricht und Ausführend entsprechender Signalisierungssteuerung, wobei der Diensttyp wenigstens eines der Folgenden umfasst: Nachrichtenzustelldienst, Sitzungsdienst, Konferenzdienst, einen Dienst zum Bearbeiten von Inhalten der CPM-Nachricht auf der Netzseite, einen Dienst, an dem eine Anwendung einer dritten Seite teilnimmt,
und einen Dienst, an dem ein Nicht-CPM-System teilnimmt, und wobei für einen Dienst, der einen Medientransportkanal erfordert, der CPM-Server (11) eine Medienfähigkeit des Dienstes bestimmt und entsprechende Medienbetriebsmittel konfiguriert und den Medientransportkanal gemäß der Medienfähigkeit aufbaut; und
Verarbeiten durch den CPM-Server (11) von Inhalten der CPM-Nachricht gemäß einer Verarbeitungsprozedur, die dem Diensttyp entspricht.

2. Verfahren nach Anspruch 1, wobei der CPM-Server (11) die Inhalte der Nachricht zu einem Empfänger über eine CPM-Nachricht sendet, wenn der Diensttyp der Nachrichtenzustelldienst ist.

3. Verfahren nach Anspruch 1, wobei sich die Signalisierungssteuerung auf die Auswahl eines Sitzungstyps bezieht, um Sitzungssteuerung auszuführen, die das Konfigurieren der Medienbetriebsmittel und das Aufbauen des Medientransportkanals gemäß einer Eigenschaft einer Sitzungsanforderung beinhaltet, wenn der Diensttyp der Sitzungsdienst ist.

4. Verfahren nach Anspruch 3, wobei der Sitzungstyp eine Nachrichtensitzung und/oder eine Sprachsitzung und/oder eine Videositzung umfasst.

5. Verfahren nach Anspruch 1, wobei die Signalisierungssteuerung das Aufbauen einer Konferenz, das Hinzufügen eines Anwenders, um an der Konferenz teilzunehmen, zu der Konferenz und das Steuern einer Sitzung der Konferenz gemäß einer Konferenzstrategie umfasst, wenn der Diensttyp Konferenzdienst ist.

6. Verfahren nach Anspruch 1, wobei der CPM-Server (11) Inhalte der CPM-Nachricht, einen Verlauf einer Sitzung und Multimediadaten, die möglicherweise in der CPM-Nachricht oder dem Verlauf der Sitzung enthalten sind, bearbeitet, wenn der Diensttyp ein Dienst zum Bearbeiten von Inhalten der CPM-Nachricht auf der Netzseite ist, wobei das Bearbeiten das Speichern, Abrufen, Löschen und Aktualisieren umfasst.

7. Verfahren nach einem der Ansprüche 1 bis 6, wobei der CPM-Server (11) ferner Protokollverarbeitung und -umsetzung auf einer von einer Anwendung einer dritten Seite empfangenen CPM-Nachricht und einer zu der Anwendung einer dritten Seite gesendeten CPM-Nachricht ausführt, wenn der Diensttyp der Dienst ist, an dem die Anwendung einer dritten Seite teilnimmt.

8. Verfahren nach einem der Ansprüche 1 bis 6, wobei der CPM-Server (11) ferner Protokollverarbeitung und -umsetzung auf einer von einem Nicht-CPM-System empfangenen CPM-Nachricht und einer zu dem Nicht-CPM-System gesendeten CPM-Nachricht ausführt, wenn der Diensttyp der Dienst ist, an dem das Nicht-CPM-System teilnimmt.

9. Server für konvergierte IP-Nachrichtenübermittlung, CPM-Server, **dadurch gekennzeichnet, dass** er Folgendes umfasst:
eine Kommunikationsschnittstelle (110), die konfiguriert ist, eine Nachricht zu empfangen oder zu senden;
eine Steuereinheit (111), die konfiguriert ist, einen Diensttyp gemäß der empfangenen CPM-Nachricht zu bestimmen und entsprechende Signalisierungssteuerung auszuführen, wobei der Diensttyp wenigstens eines der Folgenden umfasst: Nachrichtenzustelldienst, Sitzungsdienst, Konferenzdienst, einen Dienst zum Bearbeiten von Inhalten der CPM-Nachricht auf der Netzseite, einen Dienst, an dem eine Anwendung einer dritten Seite teilnimmt, und einen Dienst, in dem ein Nicht-CPM-System teilnimmt; und
eine Medieneinheit (112), die konfiguriert ist, für einen Dienst, der einen Medientransportkanal erfordert, eine Medienfähigkeit des Dienstes zu bestimmen, entsprechende Medienbetriebsmittel zu konfigurieren und den Medientransportkanal gemäß der Medienfähigkeit aufzubauen.

10. CPM-Server nach Anspruch 9, wobei die Steuereinheit (111) eine Signalisierungsmanagementeinheit (30) und eine Steuereinheit umfasst, wobei die Signalisierungsmanagementeinheit (30) konfiguriert ist, den Diensttyp für die empfangene CPM-Nachricht zu bestimmen und die CPM-Nachricht zu der Steuereinheit zu übertragen und nachfolgende Verarbeitung gemäß einem Verarbeitungsergebnis aus der Steuereinheit auszuführen; und
die Steuereinheit konfiguriert ist, die Signalisierungssteuerung auf der durch die Signalisierungsmanagementeinheit (30) gesendeten CPM-Nachricht auszuführen und das Ergebnis zu der Signalisierungsmanagementeinheit (30) zurückzugeben.

11. CPM-Server nach Anspruch 10, wobei die Steuereinheit wenigstens eine Nachrichtensteuereinheit (31), eine Sitzungssteuereinheit (32) und eine Speichersteuereinheit (33) umfasst, wobei
die Nachrichtensteuereinheit (31) konfiguriert ist, entsprechende Signalisierungssteuerung auf der empfangenen CPM-Nachricht auszuführen und ein Verarbeitungsergebnis zu der Signalisierungsmanagementeinheit (30) zurückzugeben; und eine Netzzugangsanforderung zu der Speichersteuereinheit (33) zu senden, wenn die CPM-Nachricht die Netzzugangsanforderung führt;
die Sitzungssteuereinheit (32) konfiguriert ist, die empfangene Nachricht in einer CPM-Sitzung zu der Nachrichtensteuereinheit (31) zum Verarbeiten weiterzuleiten, entsprechende Signalisierungssteuerung auf der empfangenen CPM-Sitzungssteuerungssignalisierung auszuführen, ein Verarbeitungsergebnis zu der Sitzungsmanagementeinheit (30) zurückzugeben und eine Anweisung zum Ausführen von Sitzungsmedienfähigkeitssteuerung zu der Medieneinheit (112) zu senden; und eine Anforderung zum Bearbeiten von Inhalten der CPM-Sitzung zu der Speichersteuereinheit (33) zu senden, wenn die CPM-Sitzung das Bearbeiten der Inhalte der CPM-Sitzung erfordert; und
die Speichersteuereinheit (33) konfiguriert ist, Bearbeitungsanforderungen von der Nachrichtensteuereinheit (31) und der Sitzungssteuereinheit (32) zu empfangen und Inhalte der CPM-Nachricht, einen Verlauf der CPM-Sitzung und der Mediendaten, die möglicherweise in der CPM-Nachricht oder dem Verlauf der CPM-Sitzung enthalten sind, auf der Netzseite zu bearbeiten, wobei die Speichersteuereinheit die Inhalte der CPM-Sitzung aus der Medieneinheit (112) abruft, wenn sie den Verlauf der CPM-Sitzung speichert.

12. CPM-Server nach Anspruch 10, wobei die Steuereinheit ferner Folgendes umfasst:
eine Steuereinheit (34) für die Anwendung der dritten Seite, die konfiguriert ist, Protokollverarbeitung und -umsetzung auszuführen und mit der Anwendung der dritten Seite über eine fünfte Schnittstelle zu kommunizieren, wobei die fünfte Schnittstelle Nachrichtentransport zwischen dem CPM-Server und der Anwendung der dritten Seite unterstützt.

13. CPM-Server nach Anspruch 9, wobei die Kommunikationsschnittstelle Folgendes umfasst:
eine erste Schnittstelle, die auf dem Sitzungseinleitungsprotokoll-Protokoll, SIP-Protokoll, basiert und konfiguriert ist, eine CPM-Nachricht zwischen dem CPM-Server und einem Transportnetz zu übertragen; und
eine zweite Schnittstelle, die auf dem Medientransportprotokoll basiert und konfiguriert ist, CPM-Dienstmedieninhalte zwischen dem CPM-Server (11) und einem CPM-Client (10) zu übertragen.

14. CPM-Server nach Anspruch 13, wobei die Kommunikationsschnittstelle ferner eine aus den oder alle der folgenden Schnittstellen umfasst:
eine dritte Schnittstelle, die auf dem XML-Konfigurationszugangsprotokoll-Protokoll, XCAP-Protokoll, basiert und zur Kommunikation zwischen dem CPM-Server und einer CPM-XML-Dokumentmanagementserver-Entität, XDMS-Entität, (14) konfiguriert ist und konfiguriert ist, das Erzeugen eines CPM-spezifischen XML-Dokuments zu unterstützen und das XML-Dokument zu bearbeiten; und
eine vierte Schnittstelle, die zur Kommunikation zwischen dem CPM-Server (11) und einer Netzspeicherentität (13) konfiguriert ist, und die konfiguriert ist, das Speichern und Abrufen relevanter Informationen über einen CPM-Anwender zu unterstützen und das Speichern und Abrufen von Inhalten einer Nachricht, eines Verlaufs einer Sitzung und von Multimediadaten, die möglicherweise in der Nachricht und dem Verlauf der Sitzung enthalten sind, zu unterstützen.

15. CPM-Server nach Anspruch 13, wobei die Kommunikationsschnittstelle ferner Folgendes umfasst:
eine sechste Schnittstelle, die zur Kommunikation zwischen dem CPM-Server (11) und einer Verbindungsentität (19) konfiguriert ist und konfiguriert ist, den Nachrichtentransport zwischen einem CPM-Server (11) und einem Nicht-CPM-System zu unterstützen.

16. System für konvergierte IP-Nachrichtenübermittlung, CPM-System, **dadurch gekennzeichnet, dass** es Folgendes umfasst:
einen CPM-Server (11), der konfiguriert ist, einen Diensttyp gemäß einer von einem CPM-Client (10) empfangenen CPM-Nachricht zu bestimmen und entsprechende Signalisierungssteuerung auszuführen und Inhalte der CPM-Nachricht gemäß einer Verarbeitungsprozedur, die dem Diensttyp entspricht, zu verarbeiten, wobei der Diensttyp wenigstens eines des Folgenden umfasst: Nachrichtenzustelldienst, Sitzungsdienst, Konferenzdienst, einen Dienst zum Bearbeiten von Inhalten der CPM-Nachricht auf der Netzseite, einen Dienst, an dem eine Anwendung einer dritten Seite teilnimmt, und einen Dienst, in dem ein Nicht-CPM-System teilnimmt,
und wobei für einen Dienst, der einen Medientransportkanal erfordert, der CPM-Server konfiguriert ist, eine Medienfähigkeit des Dienstes zu bestimmen und
entsprechende Medienbetriebsmittel zu konfigurieren und den Medientransportkanal gemäß der Medienfähigkeit aufzubauen; und
ein Transportnetz (12), das konfiguriert ist, CPM-Nachrichten des CPM-Clients (10) und des CPM-Servers (11) zu übertragen.

17. CPM-System nach Anspruch 16, wobei der CPM-Client (10) und das Transportnetz (12) miteinander über eine Sitzungseinleitungsprotokoll-protokollbasierte, SIPprotokollbasierte, zehnte Schnittstelle kommunizieren, wobei die zehnte Schnittstelle CPM-Nachrichtentransport zwischen dem CPM-Client (10) und dem Transportnetz (12), die Eintragung eines CPM-Anwenderendgeräts und die Authentifizierung und Zugriffsberechtigung eines CPM-Dienstes unterstützt.

18. CPM-System nach Anspruch 16, wobei der CPM-Client (10) und der CPM-Server (11) miteinander über eine medientransportprotokollbasierte zweite Schnittstelle kommunizieren, wobei die zweite Schnittstelle das Übertragen von CPM-Dienst-Medieninhalten unterstützt.

19. CPM-System nach Anspruch 16, wobei der CPM-Server und das Transportnetz (12) miteinander über eine Sitzungseinleitungsprotokoll-protokollbasierte, SIPprotokollbasierte, erste Schnittstelle kommunizieren, wobei die erste Schnittstelle unterstützt, dass der CPM-Server Präsenzinformationen verteilt und abonniert und eine Meldung von Modifikationen von XML-Dokumenten abonniert.

20. CPM-System nach Anspruch 16, wobei das CPM-System ferner Folgendes umfasst:
eine CPM-XML-Dokumentenmanagementserver-Entität, XDMS-Entität, (14), die konfiguriert ist, relevante Informationen, die durch einen CPM-Anwender aufgezeichnet sind, im XML-Dokumentformat zu speichern; mit dem CPM-Server (11) über eine XML-Konfigurationszugriffsprotokoll-protokollbasierte, XCAPprotokollbasierte, dritte Schnittstelle zu kommunizieren, wobei die dritte Schnittstelle das Erzeugen eines XML-Dokuments für einen CPM-Dienst und das Bearbeiten des XML-Dokuments unterstützt; und mit dem Transportnetz (12) über eine XCAPprotokollbasierte zwölfte Schnittstelle zu kommunizieren, wobei die zwölfte Schnittstelle das Abonnieren und Melden von Modifikationen des netzgespeicherten XML-Dokuments unterstützt.

21. CPM-System nach Anspruch 16, wobei das CPM-System ferner Folgendes umfasst:
eine Netzspeicherentität (13), die konfiguriert ist, Inhalte einer Nachricht, einen Verlauf einer Sitzung und Multimediadaten zu managen; und mit dem CPM-Server (11) über eine vierte Schnittstelle zu kommunizieren, wobei die vierte Schnittstelle das Speichern und Abrufen relevanter Informationen über einen CPM-Anwender und
das Speichern und Abrufen der Inhalte der Nachricht, des Verlaufs der Sitzung und von Multimediadaten, die möglicherweise in der Nachricht und dem Verlauf der Sitzung enthalten sind, unterstützt.

22. CPM-System nach Anspruch 16, wobei das CPM-System ferner Folgendes umfasst:
eine Entität (20) einer Anwendung einer dritten Seite, die konfiguriert ist, einen Dienst einer Anwendung einer dritten Seite für einen CPM-Anwender bereitzustellen; und mit dem CPM-Server (11) über eine fünfte Schnittstelle zu kommunizieren, wobei die fünfte Schnittstelle den Nachrichtentransport zwischen dem CPM-Server (11) und einer Anwendung einer dritten Seite unterstützt.

23. CPM-System nach Anspruch 16, wobei das CPM-System ferner Folgendes umfasst:
eine Verbindungsentität (19), die konfiguriert ist, entsprechende Formatumsetzung auf Dienstdaten, die mit einem Nicht-CPM-System wechselseitig kommuniziert werden, auszuführen; und mit dem CPM-Server (11) über eine sechste Schnittstelle zu kommunizieren, wobei die sechste Schnittstelle den Nachrichtentransport zwischen dem CPM-Server (11) und dem Nicht-CPM-System unterstützt.

24. CPM-System nach Anspruch 16, wobei das CPM-System Folgendes umfasst:
einen entfernten CPM-Server (21), der konfiguriert ist, mit dem CPM-Server (11) über eine medientransportprotokoll-basierte neunte Schnittstelle zu kommunizieren, wobei die neunte Schnittstelle das Transportieren von CPM-Dienst-Medieninhalten unterstützt.

25. Computerlesbares Medium, das computerausführbare Anweisungen zum Realisieren eines strategiebasierten Lenkungsmodus beinhaltet, das, wenn es durch eine Maschine ausgeführt wird, arbeitet, um zu bewirken, dass die Maschine alle Schritte eines Verfahrens nach einem der Ansprüche 1-8 ausführt.

## Revendications

1. Procédé pour mettre en oeuvre une messagerie IP mise en convergence, CPM, **caractérisé en ce qu'**il comprend les étapes consistant à :
recevoir, par un serveur CPM (11), un message CPM ;
déterminer, par le serveur CPM (11), un type de service selon le message CPM et
appliquer une commande de signalisation correspondante, le type de service comprenant au moins un service parmi : un service de remise de message, un service de session, un service de conférence, un service d'exploitation du contenu du message CPM côté réseau, un service auquel participe une application tierce partie et un service auquel participe un système non CPM, et, pour un service nécessitant un canal de transport de média, le serveur CPM (11) déterminant une capacité de média du service et configurant des ressources de média correspondantes et établissant le canal de transport de média selon la capacité de média ; et
traiter, par le serveur CPM (11), le contenu du message CPM selon une procédure de traitement correspondant au type de service.

2. Procédé selon la revendication 1, dans lequel le serveur CPM (11) envoie le contenu du message à un récepteur par le biais d'un message CPM si le type de service est le service de remise de message.

3. Procédé selon la revendication 1, dans lequel la commande de signalisation a pour objet de sélectionner un type de session pour appliquer une commande de session consistant à configurer les ressources de média et établir le canal de transport de média selon une caractéristique d'une demande de session si le type de service est le service de session.

4. Procédé selon la revendication 3, dans lequel le type de session comprend au moins un type parmi une session de message, une session vocale et une session vidéo.

5. Procédé selon la revendication 1, dans lequel la commande de signalisation consiste à établir une conférence, ajouter à la conférence un utilisateur souhaitant participer à la conférence et commander une session de la conférence selon un règlement de conférence, si le type de service est un service de conférence.

6. Procédé selon la revendication 1, dans lequel le serveur CPM (11) exploite le contenu du message CPM, un historique d'une session et des données multimédia éventuellement contenues dans le message CPM ou l'historique de la session si le type de service est un service d'exploitation du contenu du message CPM côté réseau, l'exploitation comprenant une mémorisation, une récupération, une suppression et une mise à jour.

7. Procédé selon l'une quelconque des revendications 1 à 6, dans lequel le serveur CPM (11) applique en outre un traitement et une conversion protocolaires sur un message CPM reçu d'une application tierce partie et un message CPM envoyé à l'application tierce partie si le type de service est le service auquel participe l'application tierce partie.

8. Procédé selon l'une quelconque des revendications 1 à 6, dans lequel le serveur CPM (11) applique en outre un traitement et une conversion protocolaires sur un message CPM reçu d'un système non CPM et un message CPM envoyé au système non CPM si le type de service est le service auquel participe le système non CPM.

9. Serveur de messagerie IP mise en convergence, CPM, **caractérisé en ce qu'**il comprend :
une interface de communication (110), configurée pour recevoir ou envoyer un message ;
une unité de commande (111), configurée pour déterminer un type de service selon le message CPM reçu et pour appliquer une commande de signalisation correspondante,
le type de service comprenant au moins un service parmi : un service de remise de message, un service de session, un service de conférence, un service d'exploitation du contenu du message CPM côté réseau, un service auquel participe une application tierce partie et un service auquel participe un système non CPM ; et
une unité de média (112), configurée pour déterminer, pour un service nécessitant un canal de transport de média, une capacité de média du service, configurer des ressources de média correspondantes et établir le canal de transport de média selon la capacité de média.

10. Serveur CPM selon la revendication 9, dans lequel l'unité de commande (111) comprend un gestionnaire de signalisation (30) et un contrôleur,
le gestionnaire de signalisation (30) étant configuré pour déterminer le type de service pour le message CPM reçu et transférer le message CPM vers le contrôleur, et appliquer un traitement consécutif selon un résultat de traitement provenant du contrôleur ; et
le contrôleur étant configuré pour appliquer la commande de signalisation sur le message CPM envoyé par le gestionnaire de signalisation (30) et renvoyer le résultat au gestionnaire de signalisation (30).

11. Serveur CPM selon la revendication 10, dans lequel le contrôleur comprend au moins un contrôleur de message (31), un contrôleur de session (32) et un contrôleur de mémorisation (33),
le contrôleur de message (31) étant configuré pour appliquer une commande de signalisation correspondante sur le message CPM reçu et renvoyer un résultat de traitement au gestionnaire de signalisation (30) ; et envoyer une demande d'accès réseau au contrôleur de mémorisation (33) si le message CPM contient la demande d'accès réseau ;
le contrôleur de session (32) étant configuré pour réacheminer le message reçu dans une session CPM vers le contrôleur de message (31) pour traitement, appliquer une commande de signalisation correspondante sur la signalisation de commande de session CPM reçue, renvoyer un résultat de traitement au gestionnaire de signalisation (30) et envoyer une instruction d'application d'une commande de capacité de média de session à l'unité de média (112) ; et envoyer une demande d'exploitation du contenu de la session CPM au contrôleur de mémorisation (33) si la session CPM nécessite l'exploitation du contenu de la session CPM ; et
le contrôleur de mémorisation (33) étant configuré pour recevoir des demandes d'exploitation provenant du contrôleur de message (31) et du contrôleur de session (32) et exploiter le contenu du message CPM, un historique de la session CPM et des données de média éventuellement contenues dans le message CPM ou l'historique de la session CPM côté réseau, le contrôleur de message récupérant le contenu de la session CPM auprès de l'unité de média (112) lors de la mémorisation de l'historique de la session CPM.

12. Serveur CPM selon la revendication 10, dans lequel l'unité de commande comprend en outre :
un contrôleur d'application tierce partie (34), configuré pour appliquer un traitement et une conversion protocolaires et communiquer avec une application tierce partie via une cinquième interface, la cinquième interface prenant en charge le transport de messages entre le serveur CPM et l'application tierce partie.

13. Serveur CPM selon la revendication 9, dans lequel l'interface de communication comprend :
une première interface, basée sur un protocole d'ouverture de session, SIP, et
configurée pour transférer un message CPM entre le serveur CPM et un réseau de transport ; et
une deuxième interface, basée sur un protocole de transport de média et configurée pour transférer un contenu de média de service CPM entre le serveur CPM (11) et un client CPM (10).

14. Serveur CPM selon la revendication 13, dans lequel l'interface de communication comprend en outre l'une ou l'ensemble des interfaces suivantes :
une troisième interface, basée sur un protocole du type protocole d'accès de configuration XML, XCAP, et configurée pour assurer la communication entre le serveur CPM et une entité serveur de gestion de documents XML, XDMS, CPM (14), et configurée pour prendre en charge la génération d'un document XML propre à la CPM et exploiter le document XML ; et
une quatrième interface, configurée pour assurer la communication entre le serveur CPM (11) et une entité de mémorisation réseau (13), et configurée pour prendre en charge la mémorisation et la récupération d'informations pertinentes relatives à un utilisateur CPM et la mémorisation et la récupération du contenu d'un message, d'un historique d'une session et de données multimédia éventuellement contenues dans le message et l'historique de la session.

15. Serveur CPM selon la revendication 13, dans lequel l'interface de communication comprend en outre :
une sixième interface, configurée pour assurer la communication entre le serveur CPM (11) et une entité d'interconnexion (19), et configurée pour prendre en charge le transport de messages entre un serveur CPM (11) et un système non CPM.

16. Système de messagerie IP mise en convergence, CPM, **caractérisé en ce qu'**il comprend :
un serveur CPM (11), configuré pour déterminer un type de service selon un message CPM reçu provenant d'un client CPM (10) et pour appliquer une commande de signalisation correspondante et traiter le contenu du message CPM selon une procédure de traitement correspondant au type de service, le type de service comprenant au moins un service parmi : un service de remise de message, un service de session, un service de conférence, un service d'exploitation du contenu du message CPM côté réseau, un service auquel participe une application tierce partie et
un service auquel participe un système non CPM, et, pour un service nécessitant un canal de transport de média, le serveur CPM étant configuré pour déterminer une capacité de média du service et configurer des ressources de média correspondantes et établir le canal de transport de média selon la capacité de média ; et
un réseau de transport (12), configuré pour transférer des messages CPM du client CPM (10) et du serveur CPM (11).

17. Système CPM selon la revendication 16, dans lequel le client CPM (10) et le réseau de transport (12) communiquent l'un avec l'autre via une dixième interface basée sur un protocole d'ouverture de session, SIP, la dixième interface prenant en charge le transport de messages CPM entre le client CPM (10) et le réseau de transport (12), l'enregistrement d'un terminal d'utilisateur CPM et l'authentification et l'autorisation d'un service CPM.

18. Système CPM selon la revendication 16, dans lequel le client CPM (10) et le serveur CPM (11) communiquent l'un avec l'autre via une deuxième interface basée sur un protocole de transport de média, la deuxième interface prenant en charge le transfert de contenus de média de service CPM.

19. Système CPM selon la revendication 16, dans lequel le serveur CPM et le réseau de transport (12) communiquent l'un avec l'autre via une première interface basée sur un protocole d'ouverture de session, SIP, la première interface prenant en charge, pour le serveur CPM, la distribution et la souscription à des informations de présence et la souscription à une notification de modifications de documents XML.

20. Système CPM selon la revendication 16, lequel système CPM comprend en outre :
une entité serveur de gestion de documents XML, XDMS, CPM (14), configurée pour mémoriser des informations pertinentes consignées par un utilisateur CPM au format de document XML; communiquer avec le serveur CPM (11) via une troisième interface basée sur un protocole du type protocole d'accès de configuration XML, XCAP, la troisième interface prenant en charge la génération d'un document XML pour un service CPM et l'exploitation du document XML ; et communiquer avec le réseau de transport (12) via une douzième interface basée sur le protocole XCAP, la douzième interface prenant en charge la souscription à des modifications du document XML mémorisé dans le réseau et leur notification.

21. Système CPM selon la revendication 16, lequel système CPM comprend en outre :
une entité de mémorisation réseau (13), configurée pour gérer le contenu d'un message, un historique d'une session et des données multimédia ; et communiquer avec le serveur CPM (11) via une quatrième interface, la quatrième interface prenant en charge la mémorisation et la récupération d'informations pertinentes relatives à un utilisateur CPM et la mémorisation et la récupération du contenu du message, de l'historique de la session et de données multimédia éventuellement contenues dans le message et l'historique de la session.

22. Système CPM selon la revendication 16, lequel système CPM comprend en outre :
une entité d'application tierce partie (20), configurée pour fournir un service d'application tierce partie pour un utilisateur CPM ; et communiquer avec le serveur CPM (11) via une cinquième interface, la cinquième interface prenant en charge le transport de messages entre le serveur CPM (11) et une application tierce partie.

23. Système CPM selon la revendication 16, lequel système CPM comprend en outre :
une entité d'interconnexion (19), configurée pour appliquer une conversion de format correspondante sur des données de service échangées avec un système non CPM ; et communiquer avec le serveur CPM (11) via une sixième interface, la sixième interface prenant en charge le transport de messages entre le serveur CPM (11) et le système non CPM.

24. Système CPM selon la revendication 16, lequel système CPM comprend :
un serveur CPM distant (21), configuré pour communiquer avec le serveur CPM (11) via une neuvième interface basée sur un protocole de transport de média, la neuvième interface prenant en charge le transport de contenus de média de service CPM.

25. Support lisible par ordinateur, incorporant des instructions exécutables par ordinateur permettant de réaliser un mode de routage réglementé, dont l'exécution par une machine fait en sorte que la machine accomplisse toutes les étapes d'un procédé selon l'une quelconque des revendications 1 à 8.
